# EUROPÄISCHE PATENTSCHRIFT

(11) **EP 3 656 581 B1**
(45) Veröffentlichungstag und Bekanntmachung des Hinweises auf die Patenterteilung: **26.05.2021**
(21) Anmeldenummer: 19209557.8
(22) Anmeldetag: 15.11.2019
(51) Int. Cl.: B60C 11/16

(54) **GLEITSCHUTZSTIFT**
ANTI-SKID SPIKE
TIGE ANTIDÉRAPANTE

(30) Priorität: 22.11.2018 DE 102018129477
(43) Veröffentlichungstag der Anmeldung: 27.05.2020
(73) Patentinhaber: SITEK-Spikes GmbH & Co. KG, 78733 Aichhalden (DE)
(72) Erfinder: PHILIPP, Matthias, 78628 Rottweil (DE); VOGLER, Falko, 77761 Schiltach (DE)
(74) Vertreter: Herrmann, Jochen

(56) Entgegenhaltungen:
- WO-A1-2017/198352
- DE-A1- 2 623 754
- KR-A- 20100 053 878

## Beschreibung

Die Erfindung betrifft einen Gleitschutzstift für einen Reifen, insbesondere einen Fahrzeugluftreifen mit einem Verschleißstift und einem Tragteil, wobei der Verschleißstift entlang seiner Längsachse zumindest einen Kopfabschnitt, einen Schaftabschnitt und einen dem Kopfabschnitt gegenüberliegenden Fußabschnitt aufweist, wobei der Kopfabschnitt aus dem Tragteil herausragt und der Schaftabschnitt und der Fußabschnitt von dem Tragteil aufgenommen sind, wobei der Verschleißstift an dem Tragteil durch zumindest eine Formschlussverbindung gehalten ist und wobei der Schaftabschnitt quer zur Längsachse von einer Umfangsfläche begrenzt ist.

Aus der DE 10 2016 208 386 A1 ist ein Spike für einen Fahrzeugluftreifen mit einem Spikekörper aus einem faserverstärkten Kunststoff, in dem ein Spikepin gehalten ist, bekannt. Der Spikepin lässt sich in einen Kopfabschnitt, einen Schaftabschnitt und einen Fußabschnitt aufteilen, wobei der Kopfabschnitt radial außen liegend aus dem Spikekörper herausragt. An den Spikepin sind Verankerungselemente angeformt, welche den Durchmesser des Spikepins insbesondere in seinem Fußabschnitt erweitern und damit eine Formschlussverbindung zu dem Spikekörper herstellen. Die am Fußabschnitt vorgesehenen Verankerungselemente können rotationssymmetrisch zur Längsachse des Spikepins, aber auch in Umfangsrichtung unterbrochen ausgebildet sein. Im Betrieb wirken hohe Kräfte auf den Spikepin, welche über die Verankerungselemente an den Spikekörper übertragen werden. Nachteilig weisen die an dem Fußteil vorgesehenen Verankerungselemente dazu nur kleine Kontaktflächen zu dem Spikekörper auf, was insbesondere bei aus Polymeren/Elastomeren hergestellten Spikekörpern leicht zu Deformationen des Polymermaterials und in Folge zum Verlust des Spikepins führen kann. Dieser Effekt wird noch dadurch verstärkt, dass zwischen dem Krafteinleitungspunkt am Kopfabschnitt und der Formschlussverbindung am Fußabschnitt des Spikepins ein vergleichsweise großer Hebel ausgebildet ist, wodurch sich im Kontaktbereich zwischen den an dem Fußteil angeordneten Verankerungselementen und dem umgebenden Material hohe Kräfte ausbilden. Entsprechend einem in der DE 10 2016 208 386 A1 gezeigten Ausführungsbeispiel sind Verankerungselemente als in Längsrichtung aufeinanderfolgende, umlaufend an dem Schaftabschnitt und dem Fußabschnitt des Spikepins angeordnete Erhebungen und Vertiefungen ausgebildet. Durch diese Anordnung werden die in radialer Richtung eines Reifens ausgerichteten Kontaktflächen zwischen dem Spikepin und dem Spikekörper vergrößert, wodurch größere radial nach innen bzw. nach außen gerichtete Kräfte aufgenommen werden können. Aus unterschiedlichen Richtungen auf den Spikepin einwirkende Kräfte können jedoch dazu führen, dass sich ein solcher Spikepin in dem Spikekörper verdreht. Dies gilt insbesondere bei durch Abnutzung veränderter Formgeometrie des Kopfabschnittes des Spikestiftes. Das Drehen des Spikepins in dem Spikekörper kann dazu führen, dass sich der Spikepin aus dem Spikekörper löst und verloren geht.

Die Schrift DE 7229002 U beschreibt einen Reifennagel, bestehend aus einem Stift aus einem harten Material und einem Halter aus einem weicheren Material. Der Halter ist von einem in Richtung seiner Längserstreckung verlaufenden Durchgangsloch durchdrungen, in welches der Stift eingesetzt ist. Der Halter und der Stift weisen zusammenwirkende Anschläge, insbesondere in Form von Querschnittsänderungen, auf, welche den Stift in Richtung nach auswärts halten. Nach innen ist das Durchgangsloch durch einen Pfropfen verschlossen. Der Stift ist somit formschlüssig in dem Halter gehalten. An seiner äußeren Oberfläche kann der Reifennagel Rippen aufweisen, die ein Verdrehen eines an einem Reifen festgelegten Reifennagels verhindern.

Die Schrift WO 92/01399 zeigt einen Stift zur Verwendung in einer Schuhsohle. Der Stift weist einen flächigen Halteabschnitt auf, in dessen Mittenbereich eine nach unten gerichtete Spitze angeformt ist. Der Halteabschnitt kann in einer Schuhsohle verankert werden, wobei die Spitze aus der Sohle ragt. Um den Halteabschnitt kann eine Erweiterung angeformt sein, welche in das Material der Schuhsohle eingebettet wird. Der Halteabschnitt kann beispielsweise scheibenförmige und mit Durchbrüchen versehen oder mit radial nach außen gerichteten Armen ausgebildet sein. Er ermöglicht so eine drehfeste Lagerung des Stiftes in der Sohle.

Die Schrift WO 99/52721 schlägt einen Spike mit einer Spitze aus Hartmetall und einem gegenüberliegend angeordneten Flansch vor, mit dem der Spike in einem Reifen gehalten ist. Der Flansch ist aus einem elastischen Material gefertigt, so dass bei einer durch Querkräfte verursachten Neigung des Spikes keine Beschädigung des Reifens erfolgt.

Die Schrift WO 2018/114076 beschreibt ein Verfahren zur Herstellung eines Spikes und einen durch das Verfahren hergestellten Spike. Der Spike ist aus einem Spikekörper und einem in den Spikekörper eingesetzten, vorzugsweise konischen Spikepin gebildet. Der Spikekörper weist ein durch ein Laserschmelzverfahren hergestelltes Metallgerippe auf, in dem der Spikepin gehalten ist. Das Metallgerippe ist mit einem Kunststoff oder Gummimaterial umspritzt, wodurch die äußere Form des Spikekörpers erhalten wird. Die Herstellung eines solchen Spikes ist aufwändig und kostenintensiv.

Aus der Schrift EP 1 798 068 B1 ist ein Spikestift bekannt, der in einem Körper eines Spikes gehalten ist. Der Spikestift weist an seinem äußeren Ende einen dreieckigen und zu seinem gegenüberliegenden Ende einen kreisrunden Querschnitt auf.

Die EP 1 531 065 B1 offenbart einen von einem Kantenbereich in ein Ober- und ein Unterteil unterteilten Spikestift. Das Oberteil ist durch einen ebenen Abschnitt (Tafel), eine Kante oder eine Spitze gebildet, welche über wenigstens eine Facette zum Kantenbereich hin übergeleitet ist. Das von dem Kantenbereich ausgehende Unterteil verjüngt sich mit steigendem Abstand von dem Kantenbereich in Form eines Kegels, eines Kegelstumpfes, einer Pyramide oder eines Pyramidenstumpfes.

Aus der Druckschrift WO 2017/198352 A1 ist ein Spike bekannt, welcher aus einem Hauptkörperteil, einem Fußteil und aus einem Spikepin besteht, wobei der Spikepin aus dem Hauptkörperteil herausragt und der Fußteil in dem Hauptkörperteil seitlich überragt. Der Spikepin weist ein Pinschaft auf, welcher mit Verankerungselementen versehen ist.

Die DE 26 23 754 A1 offenbart ein Reifenspike mit einem Spikekörper, der im Körper rohrförmig eingebettet ist, wobei die Spitze des Spikekörpers aus dem Körper hervorsteht. Der Körper ist durch einen flanschartigen Halteabschnitt, einen Halsabschnitt und durch eine zur Spitze konisch zulaufende Form charakterisiert. Der Spikekörper ist formschlüssig durch umlaufende Rippen mit Sägezahnprofil mit dem Körper verbunden und ragt aus dem konisch zulaufenden Abschnitt heraus.

Des Weiteren zeigt die KR 2010 0053878 A ein Spike, welcher aus einem Körper und einer Schraube besteht. Der Körper weist ein Innengewinde auf, in welches die Schraube eingedreht wird, so dass der Schraubkopf aus dem Körper hervorsteht. Das andere Ende der Schraube liegt auf dem Boden des Körpers, welcher durch das Innengewinde entsteht, auf.

Es ist Aufgabe der Erfindung, einen Gleitschutzstift mit einem in einem Tragteil gehaltenen Verschleißstift bereitzustellen, welcher kostengünstig herstellbar ist und einen Verlust des Verschleißstiftes sowie ein Verdrehen des Verschleißstiftes gegenüber dem Tragteil sicher vermeidet.

Die Aufgabe der Erfindung wird dadurch gelöst, dass zumindest an dem Schaftabschnitt Vertiefungen und/oder Erhebungen angeordnet sind und dass die Vertiefungen und/oder Erhebungen entlang der Längsachse des Verschleißstiftes beabstandet zueinander angeordnet und in Umfangsrichtung zumindest abschnittsweise unterbrochen, beispielsweise geteilt sind. Vertiefungen sind dabei Bereiche der Umfangsfläche des Verschleißstiftes, welche in Form von Einbuchtungen, Einkerbungen, Senken, Mulden oder ähnlichem gegenüber ihrer Umgebung tiefergelegt, also in Richtung zu einer Mittellängsachse des Verschleißstiftes hin eingeformt sind. Erhebungen ragen über ihre Umgebung hinaus. Durch die an dem Schaftabschnitt angeordneten Vertiefungen und/oder Erhebungen sind jeweils Formschlussverbindungen zwischen dem Verschleißstift und dem den Verschleißstift umgebenden Tragteil ausgebildet. Diese blockieren eine Bewegung des Verschleißstiftes gegenüber dem Tragteil. Durch die mehrfache Ausfertigung von Vertiefungen und/oder Erhebungen ist in Summe eine große, in axialer Richtung blockierende Kontaktfläche zwischen dem Verschleißstift und dem Tragteil ausgebildet. Auch bei hohen, in axialer Richtung auf den Verschleißstift einwirkenden Kräften bleibt daher die Flächenpressung an den Kontaktflächen vergleichsweise gering. Eine Deformation des im Vergleich zu dem Verschleißstift aus einem weicheren Material hergestellten Tragteils kann vorteilhaft verringert oder vermieden werden.

Die Vertiefungen und/oder Erhebungen können entlang des Schaftabschnittes bis nahe an den Kopfabschnitt herangeführt werden. Es bildet sich dann nur ein vergleichsweise kurzer Hebel zwischen den Formschlussverbindungen, welche von den dem Kopfabschnitt zugewandten Vertiefungen und/oder Erhebungen gebildet sind, und dem Kopfabschnitt als Krafteinleitungspunkt aus. Auf den aus dem Tragteil und damit einem Reifen hervorstehenden Kopfabschnitt des Verschleißstiftes einwirkende Querkräfte führen aufgrund der vergleichsweise kurzen Hebellänge zu einer geringeren Belastung der zwischen dem Verschleißstift und dem Tragteil ausgebildeten Kontaktflächen, als dies bei einer Kraftübertragung alleine durch eine Verbreiterung des Verschleißstiftes in dem Fußabschnitt des Verschleißstiftes der Fall ist. Auch dadurch können Deformationen des Tragteils verringert oder vermieden werden.

Im Rahmen der Erfindung kann der Fußabschnitt des Verschleißstifts einen von dem Schaftabschnitt abweichenden Querschnitt aufweisen. Denkbar ist es jedoch auch, dass der Fußabschnitt zumindest bereichsweise oder vollständig den gleichen Querschnitt wie der Schaftabschnitt aufweist, und/oder, dass der Schaftabschnitt und der Fußabschnitt übergangslos ineinander übergehen.

Dadurch, dass die Vertiefungen und/oder Erhebungen in Umfangsrichtung geteilt sind, wirken die Formschlussverbindungen auch in Umfangsrichtung. Ein Verdrehen des Verschleißstiftes gegenüber dem Tragteil wird dadurch verhindert. Dies gilt insbesondere bei einer einseitigen Abnutzung des Kopfabschnitts des Verschleißstiftes. Eine solche einseitige Abnutzung kann beim Kontakt des Kopfabschnitts mit einem Straßenbelag zur Ausbildung von auf den Verschleißstift einwirkenden und um dessen Längsachse gerichteten Rotationskräften führen. Durch die Unterbrechungen der Vertiefungen und/oder der Erhebungen in Umfangsrichtung sind zwischen dem Verschleißstift und dem Tragteil Kontaktflächen ausgebildet, welche einer um seine Längsachse gerichteten Drehbewegung des Verschleißstiftes entgegenwirken.

Die erfindungsgemäße Ausbildung des Verschleißstiftes führt somit zur großflächigen Ausbildung von Kontaktflächen zwischen dem Verschleißstift und dem den Verschleißstift umgebenden Tragteil, welche sowohl eine axiale Bewegung des Verschleißstiftes gegenüber dem Tragteil, eine Kippbewegung quer zu seiner Längsachse wie auch eine Rotationsbewegung um seine Längsachse blockieren. Der Querschnitt des Verschleißstiftes kann entlang seiner Längsachse beispielsweise kreisrund, oval oder polygonförmig ausgeformt sein. Er kann entlang seiner Längserstreckung eine gleichbleibende oder eine sich in ihrem Querschnitt und/oder in ihrer geometrischen Ausformung verändernde Kontur aufweisen.

Um sowohl axial auf den Verschleißstift einwirkende Kräfte wie auch Rotationskräfte sicher abzufangen kann es vorgesehen sein, dass die Vertiefungen und/oder die Erhebungen entlang ihrer Längserstreckungen in einem Winkel zu der Längsachse des Verschleißstiftes angeordnet sind, vorzugsweise dass die Vertiefungen und/oder die Erhebungen in einem Winkel in einem Bereich von 0° bis 90° zu der Längsachse angeordnet sind, besonders bevorzugt dass die Vertiefungen und/oder die Erhebungen in einem Winkel in einem Bereich von 45° bis 90° zu der Längsachse angeordnet sind. Bei kleinen Winkeln, insbesondere bei einem Winkel von 0°, zwischen dem Verlauf der Vertiefungen und/oder der Erhebungen und der Längsachse des Verschleißstiftes können insbesondere große Rotationskräften abgefangen werden. Bei großen Winkeln, insbesondere bei einem Winkel von 90°, können besonders hohe in axialer Richtung wirkende Kräfte aufgenommen werden. Durch eine schräge Anordnung der Vertiefungen und/oder der Erhebungen zu der Längsachse des Verschleißstiftes können sowohl hohe, axial ausgerichtete Kräfte wie auch Rotationskräften abgefangen werden. Dabei kann durch die Wahl eines geeigneten Winkels, insbesondere in einem Bereich von 60° bis 90°, der Gleitschutzstift an eine erwartete Belastung angepasst werden.

Vorzugsweise kann es vorgesehen sein, dass die Vertiefungen und/oder die Erhebungen in gleichen Winkeln zu der Längsachse des Verschleißstiftes ausgerichtet sind oder dass die Vertiefungen und/oder die Erhebungen zumindest teilweise in verschiedenen Winkeln zu der Längsachse des Verschleißstiftes ausgerichtet sind. Durch die gleichen Winkel der Vertiefungen bzw. Erhebungen können Hinterschnitte vermieden werden, wodurch einfache Formen (Matrizen) zur Formgebung der Verschleißstifte ermöglicht werden. Sind Vertiefungen und/oder Erhebungen vorgesehen, die in unterschiedlichen Winkeln zu der Längsachse des Verschleißstiftes ausgerichtet sind, so können die damit ausgebildeten Formschlussverbindungen jeweils für die Aufnahme unterschiedlicher zu erwartender Kräfte, beispielsweise für axial und in Umfangsrichtung auf den Verschleißstift einwirkende Kräfte, optimiert ausgebildet werden.

Besonders bevorzugt kann es vorgesehen sein, dass entlang der Längsachse aufeinanderfolgende Vertiefungen in gleichem Winkel zu der Längsachse des Verschleißstiftes ausgerichtet sind und dass an in Umfangsrichtung benachbarten oder nicht benachbarten oder gegenüberliegenden Abschnitten der Umfangsfläche angeordnete Vertiefungen in unterschiedlichen Winkeln zu der Längsachse des Verschleißstiftes ausgerichtet sind. Es können so beispielsweise Abschnitte mit Vertiefungen vorgesehen werden, welche insbesondere zur Aufnahme von axial auf den Verschleißstift einwirkenden Kräften ausgerichtet sind. In einem weiteren, in Umfangsrichtung beabstandeten Abschnitt können dann Vertiefungen derart ausgebildet sein, dass sie insbesondere in Umfangsrichtung wirkende Kräfte aufnehmen.

Entsprechend kann es vorgesehen sein, dass entlang der Längsachse des Verschleißstiftes aufeinanderfolgende Erhebungen in gleichem Winkel zu der Längsachse des Verschleißstiftes ausgerichtet sind und dass an in Umfangsrichtung benachbarten oder nicht benachbarten oder gegenüberliegenden Abschnitten der Umfangsfläche angeordnete Erhebungen in unterschiedlichen Winkeln zu der Längsachse des Verschleißstiftes ausgerichtet sind. Auch hier können in Umfangsrichtung beabstandete Abschnitte mit jeweils zur Aufnahme unterschiedlicher einwirkender Kräfte optimierten Formschlussverbindungen durch die jeweiligen Erhebungen ausgebildet sein.

Gemäß einer denkbaren Ausgestaltungsvariante der Erfindung kann es vorgesehen sein, dass der Verschleißstift zwei gegenüberliegende Seiten aufweist, die jeweils ein unterschiedliches Muster von Erhebungen und/oder Vertiefungen aufweisen. Dabei können beispielsweise die Seiten quer oder längs zur Umfangsrichtung des Reifens ausgerichtet sein. Dies trägt unterschiedlichen Belastungen des Verschleißstifts während des Betriebs in optimierter Weise Rechnung.

Eine optimierte Kraftableitung von dem Verschleißstift zu dem Tragteil kann dadurch erreicht werden, dass an gegenüberliegenden Abschnitten der Umfangsfläche Vertiefungen angeordnet sind und dass die Vertiefungen in einem Winkel zu der Längsachse des Verschleißstiftes derart ausgerichtet sind, dass sich ihre Projektionen kreuzen und/oder dass an gegenüberliegenden Abschnitten der Umfangsfläche Erhebungen angeordnet sind und dass die Erhebungen in einem Winkel zu der Längsachse des Verschleißstiftes derart ausgerichtet sind, dass sich ihre Projektionen kreuzen. Vorteilhaft verlaufen bei einer solchen Anordnung Erhebungen und insbesondere Vertiefungen in Projektion nicht deckungsgleich. Eine Verringerung des Querschnitts, insbesondere durch deckungsgleich angeordnete Vertiefungen, mit einer damit einhergehenden Schwächung des Verschleißstiftes wird so vermieden.

Um Querschnittsveränderungen des Verschleißstiftes zu vermeiden bzw. gering zu halten kann es vorgesehen sein, dass an in Umfangsrichtung benachbarten oder nicht benachbarten oder gegenüberliegenden Abschnitten der Umfangsfläche angeordnete Vertiefungen in Richtung der Längsachse versetzt zueinander angeordnet sind und/oder dass an in Umfangsrichtung benachbarten oder nicht benachbarten oder gegenüberliegenden Abschnitten der Umfangsfläche angeordnete Erhebungen in Richtung der Längsachse versetzt zueinander angeordnet sind. Es wird auf diese Weise eine entlang seiner Längserstreckung gleichmäßige Belastbarkeit des Verschleißstiftes erreicht und ein Bruch des Verschleißstiftes, wie er insbesondere bei einer Querschnittsverringerung auftreten kann, kann vermieden werden.

Die Kraftübertragung von dem Verschleißstift zu dem Tragteil kann dadurch weiter verbessert bzw. an die jeweiligen Anforderungen angepasst werden, dass die Vertiefungen entlang ihrer jeweiligen Längserstreckung gegenüber der Umfangsfläche des Verschleißstiftes eine gleichbleibende oder eine sich verändernde Tiefe aufweisen und/oder dass die Vertiefungen entlang ihrer jeweiligen Längserstreckung eine sich verändernde Kontur aufweisen und/oder dass die Erhebungen entlang ihrer jeweiligen Längserstreckung gegenüber einer Umfangsfläche des Verschleißstiftes eine gleichbleibende oder eine sich verändernde Höhe aufweisen und/oder dass die Erhebungen entlang ihrer jeweiligen Längserstreckung eine sich verändernde Kontur aufweisen. Durch eine sich entlang ihrer Längserstreckung ändernde Tiefe und/oder Kontur der Vertiefungen bzw. durch eine sich ändernde Höhe und/oder Kontur der Erhebungen können die Ausrichtung und/oder die Fläche der sich zwischen dem Verschleißstift und dem Tragteil ausbildenden Kontaktflächen beeinflusst werden.

Entsprechend einer besonders bevorzugten Ausgestaltungsvariante der Erfindung kann es vorgesehen sein, dass die Vertiefungen gegenüber der Umfangsfläche eine Tiefe in einem Bereich von 0 bis 1mm aufweisen und/oder dass die Erhebungen gegenüber der Umfangsfläche eine Höhe in einem Bereich von 0 bis 1mm aufweisen. Die minimalen Tiefen der Vertiefungen bzw. Höhen der Erhebungen gewährleisten die Ausbildung von wirksamen Formschlussverbindungen, die insbesondere auch bei unterschiedlichsten Betriebstemperaturen einen sicheren Halt des Verschleißstiftes garantieren. Bei den vorgegebenen, maximalen Tiefen der Vertiefungen ist sichergestellt, dass eine ausreichende Querschnittsfläche des Verschleißstiftes und damit eine ausreichende mechanische Stabilität erhalten bleiben. Durch die maximale Höhe der Erhebungen wird gewährleistet, dass der Verschleißstift von dem aus üblichen Materialien hergestellten Tragteil umfasst und die Formschlussverbindungen hergestellt werden können, ohne dass sich in den Zwischenbereichen zwischen den Erhebungen Hohlräume zwischen dem Tragteil und dem Verschleißstift ausbilden und ohne dass sich die Erhebungen auf die Oberfläche des Tragteils durchdrücken.

Um Kerbwirkungen sowohl an dem Verschleißstift wie auch an dem umgebenden Tragteil zu vermeiden kann es vorgesehen sein, dass Übergänge von den Vertiefungen und/oder den Erhebungen in die Umfangsfläche des Verschleißstiftes abgerundet oder gefast ausgebildet sind und dass die Radien der Übergänge und/oder die Fasenbreiten der Fasen vorzugsweise zwischen 0,1mm und 0,6mm betragen. Die Fasenbreite bemisst dabei eine Kathete eines rechtwinkligen Dreiecks, dessen Hypotenuse durch die Fläche der Fase gebildet ist.

Vorzugsweise kann es vorgesehen sein, dass die Vertiefungen und/oder die Erhebungen als geometrische Figuren, insbesondere als Kreise, Zylinder, Dreiecke, Pyramiden, Polygone oder Tropfen, ausgebildet sind und/oder dass die Vertiefungen und/oder die Erhebungen als Rändelung ausgebildet sind. Durch geometrische Figuren können Formschlussverbindungen zwischen dem Verschleißstift und dem Tragteil ausgebildet werden, welche eine Bewegung des Verschleißstiftes gegenüber dem Tragteil in verschiedene Richtungen blockieren. Es können gleiche oder unterschiedliche geometrische Figuren als Vertiefungen und/oder Erhebungen an einem Verschleißstift ausgebildet sein.

Besonders belastbare und langlebige Verschleißstifte können sich dadurch auszeichnen, dass der Verschleißstift aus einem Hartwerkstoff, insbesondere aus Hartmetall, gebildet ist.

Das Tragteil kann vorzugsweise aus einem Metall und/oder einer Keramik und/oder einem Elastomer und/oder einem Polymer, insbesondere einem verstärkten, beispielsweise faserverstärkten Polymer, gebildet sein. Metalle können als duktile Materialien einfach um den Verschleißstift geformt werden, sodass sich die Formschlussverbindungen, gegebenenfalls zusätzlich zu einem kraftschlüssigen Presssitz, ausbilden. Aus Keramik hergestellte Tragteile weisen eine hohe mechanische Beständigkeit auf. Ihre thermische Ausdehnung sowie ihr Schrumpf bei der Herstellung des Gleitschutzstiftes kann ähnlich der des Verschleißstiftes ausgelegt werden, sodass sich durch die thermische Ausdehnung und/oder durch den Schrumpf kein oder nur ein geringes Spiel zwischen dem Verschleißstift und dem Tragteil ausbildet. Ein aus Polymer hergestelltes Tragteil ist kostengünstig herstellbar und weist vorteilhaft nur ein geringes Gewicht auf. Ein geringes Gewicht des Tragteils und damit des Gleitschutzstiftes führt bei der Anwendung in einem Fahrzeugreifen zu einer geringen Belastung eines Straßenbelags. Durch eine Verstärkung, beispielsweise Faserverstärkung des Polymers, kann die mechanische Beständigkeit des Tragteils signifikant verbessert werden. Es eignen sich verschiedene Polymere, beispielsweise in Form von Duroplasten oder Thermoplasten, zur Herstellung des Tragteils. Das Tragteil kann beispielsweise aus Epoxidharz, ungesättigtem Polyesterharz, Vinylesterharz, Phenol-Formaldehydharz, Diallylphthalatharz, Methacrylatharz, Polyurethan, Aminoharze, Melaminharz oder Harnstoffharz, Polyvinylchlorid (PVC), Polyethylen (PE), Polypropylen (PP), Polyamid (PA), Polyoxymethylen (POM), Polyethylenterephthalat (PET), Polytetrafluorethylen (PTFE), Polyvinylidenfluorid (PVDF), Ethylenchlortrifluorethylen (ECTFE), Perfluoralkoxy-Polymer (PFA), Polyfluorethylenpropylen (FEP), Tetrafluorethylen-Perfluor-Methylvinylether (MFA), Polyetheretherketon (PEEK), Polyetherimid (PEI), Polyethersulfon (PES), Polysulfon (PSU), Polyphenylensulfid (PPS), Polycarbonat (PC), Polyketon (PK) oder Acrylnitril-Butadien-Styrol (ABS) hergestellt sein.

Denkbar ist es auch, dass das Tragteil nicht nur aus einem der vorgenannten Kunststoffe, sondern aus zwei oder mehreren dieser Kunststoffe mit unterschiedlichen Materialeigenschaften gefertigt ist. Dabei kann beispielsweise ein verschleißfester Kunststoff im Kopfbereich, also an der Stelle an der der Verschleißstift aus dem Tragteil herausragt, vorgesehen sein. Ein weiterer Kunststoff mit zähen Materialeigenschaften kann an der gegenüberliegenden Seite im Verankerungsbereich des Tragteils verwendet sein.

Die mehreren Kunststoffe lassen sich beispielsweise im Zwei- bzw. Mehr-Komponentenverfahren, beispielsweise Zwei- oder Mehr-Komponentenspritzguß-Verfahren verarbeiten.

Es ist weiterhin auch denkbar, dass an einem Tragteil organische und nicht organische Materialien verbaut sind. So kann beispielsweise ein Tragteil verwendet sein, der einen Metallkörper, insbesondere einen Aluminiumkörper aufweist und der insbesondere zur Fixierung des Verschleißstiftes dienen kann und weiterhin ein Kunststoffbauteil, der beispielsweise als Verankerungs-Fuß ausgebildet sein kann.

Die Erfindung wird im Folgenden anhand der in den Zeichnungen dargestellten Ausführungsbeispiele näher erläutert. Es zeigen:
- Fig. 1: in einer perspektivischen Darstellung einen Gleitschutzstift mit einem Tragteil und einem darin gehaltenen Verschleißstift,
- Fig. 2a: in einer Seitenansicht einen Verschleißstift mit polygonförmigem Querschnitt und einer Anordnung von Vertiefungen,
- Fig. 2b: in einer Draufsicht den in Fig. 2a gezeigten Verschleißstift,
- Fig. 3a: in einer Seitenansicht einen Verschleißstift mit polygonförmigem Querschnitt und einer weiteren Anordnung von Vertiefungen,
- Fig. 3b: in einer Draufsicht den in Fig. 3a gezeigten Verschleißstift,
- Fig. 4: in einer schematischen perspektivischen Darstellung einen rechteckigen Verschleißstift mit quer verlaufenden Vertiefungen an gegenüberliegenden langen Abschnitten einer Umfangsfläche des Verschleißstiftes,
- Fig. 5: in einer schematischen perspektivischen Darstellung einen rechteckigen Verschleißstift mit quer verlaufenden Erhebungen an gegenüberliegenden langen Abschnitten einer Umfangsfläche des Verschleißstiftes,
- Fig 5a: in einer schematischen perspektivischen Darstellung einen rechteckigen Verschleißstift mit quer verlaufenden Erhebungen und Vertiefungen an gegenüberliegenden Seiten einer Umfangsfläche des Verschleißstifts
- Fig. 6: in einer schematischen perspektivischen Darstellung einen rechteckigen Verschleißstift mit quer verlaufenden Vertiefungen an gegenüberliegenden kurzen Abschnitten einer Umfangsfläche des Verschleißstiftes,
- Fig. 7: in einer schematischen perspektivischen Darstellung einen rechteckigen Verschleißstift mit quer verlaufenden Erhebungen an gegenüberliegenden kurzen Abschnitten einer Umfangsfläche des Verschleißstiftes,
- Fig. 8: in einer schematischen perspektivischen Darstellung einen rechteckigen Verschleißstift mit schräg verlaufenden Vertiefungen an gegenüberliegenden langen Abschnitten einer Umfangsfläche des Verschleißstiftes,
- Fig. 9: in einer schematischen perspektivischen Darstellung einen rechteckigen Verschleißstift mit gekreuzt angeordneten Vertiefungen an gegenüberliegenden langen Abschnitten einer Umfangsfläche des Verschleißstiftes,
- Fig. 10: in einer Seitenansicht einen rechteckigen Verschleißstift mit nicht deckungsgleich angeordneten Vertiefungen an gegenüberliegenden langen Abschnitten einer Umfangsfläche des Verschleißstiftes,
- Fig. 11: in einer schematischen perspektivischen Darstellung einen Verschleißstift mit einer kreisrunden Querschnittsfläche,
- Fig. 12: in einer schematischen perspektivischen Darstellung einen rechteckigen Verschleißstift mit schräg angeordneten, verkürzten Vertiefungen an gegenüberliegenden langen Abschnitten einer Umfangsfläche des Verschleißstiftes,
- Fig. 13: in einer schematischen perspektivischen Darstellung einen Verschleißstift mit polygonförmigem Querschnitt und schräg angeordneten, verkürzten Vertiefungen an gegenüberliegenden langen Abschnitten einer Umfangsfläche des Verschleißstiftes,
- Fig. 14: in einer schematischen perspektivischen Darstellung einen konisch zulaufenden Verschleißstift mit kreisrunden Querschnitt und schräg angeordneten Vertiefungen,
- Fig. 15: in einer schematischen perspektivischen Darstellung einen sich verjüngenden Verschleißstift mit rechteckigen Querschnitt und schräg angeordneten Vertiefungen,
- Fig. 16: in einer schematischen perspektivischen Darstellung einen rechteckigen Verschleißstift mit kreisrund ausgebildeten Vertiefungen,
- Fig. 17: in einer schematischen perspektivischen Darstellung einen rechteckigen Verschleißstift mit einer Anordnung als unterschiedliche geometrische Figuren ausgebildeten Vertiefungen und
- Fig. 18: in einer Seitenansicht einen Verschleißstift mit polygonförmigem Querschnitt und als Rändelung ausgebildeten Vertiefungen.
- Fig 19 und 20: in Perspektive und Seitenansicht eine weitere Ausgestaltungsvariante eines Geleitschutzstifts

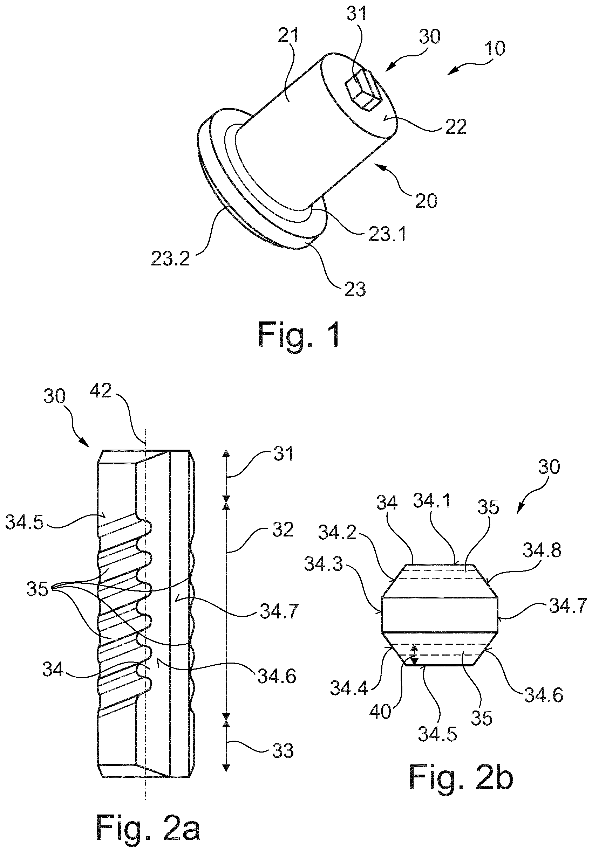

Figur 1 zeigt in einer perspektivischen Darstellung einen Gleitschutzstift 10 mit einem Tragteil 20 und einem darin gehaltenen Verschleißstift 30, wie er näher in Fig. 2a gezeigt ist. Der Verschleißstift 30 weist in der gezeigten Ausführungsform einen polygonförmigen, vorliegend einen achteckigen Querschnitt auf. Ein in Fig. 2a durch einen Doppelpfeil gekennzeichneter Schaftabschnitt 32 sowie ein ebenfalls durch einen Doppelpfeil gekennzeichneter Fußabschnitt 33 des Verschleißstiftes 30 sind innerhalb des Tragteils 20 angeordnet und von diesem gehalten. Ein Kopfabschnitt 31 des Verschleißstiftes 30, wie er ebenfalls in Fig. 2a durch einen Doppelpfeil gekennzeichnet ist, ragt über eine stirnseitige Außenfläche 22 des Tragteils 20 hinaus.

Wie Fig. 1 zu entnehmen ist, weist das Tragteil 20 einen zylinderförmigen Halteabschnitt 21 auf. Der zylinderförmige Halteabschnitt 21 ist gegenüberliegend zu der stirnseitigen Außenfläche 22 von einem Flanschabschnitt 23 abgeschlossen. Der Flanschabschnitt 23 weist einen kreisrunden Querschnitt auf. Der Durchmesser des Flanschabschnittes 23 ist gegenüber dem Durchmesser des Halteabschnitts 21 vergrößert. Die Mantelfläche des Halteabschnitts 21 geht über einen Übergangsabschnitt 23.1 abgerundet in eine der stirnseitigen Außenfläche 22 zugewandte Oberfläche des Flanschabschnittes 23 über. Gegenüberliegend ist der Flanschabschnitt 23 durch eine Schrägfläche 23.2 abgeschlossen.

Im Rahmen der Erfindung sind auch Tragteile 20 verwendbar, die nicht nur einen sondern zwei oder mehrere Flanschabschnitte 23 aufweisen.

In dem gezeigten Ausführungsbeispiel ist der Verschleißstift 30 aus einem Hartmetall und das Tragteil 20 aus einem verstärkten, beispielsweise faserverstärkten Kunststoff gebildet. Als Fasern können Aramidfasern, Kohlenstofffasern, Polyesterfasern, Nylonfasern, Polyethylenfasern oder Plexiglasfasern eingesetzt werden. Auch ist es denkbar, Basaltfasern, Borfasern, Glasfasern, Keramikfasern oder Kieselsäurefasern zu verwenden. Denkbar ist auch die Verwendung eines verstärkten Kunststoffes, welcher kugelförmige Verstärkungskomponenten beinhaltet.

Es kann weiterhin auch vorgesehen sein, dass der Kunststoff eine oder mehrere weitere Substanzen aufweist. So kann es beispielsweise vorgesehen sein, dass der Kunststoff ein Mittel aufweist, das eine schmierende Eigenschaft aufweist. Beispielsweise ist hier der Einsatz von Teflon denkbar. Hierdurch wird die Verschleißeigenschaft des Tragteils 20 positiv beeinflusst. Insbesondere wird der Verschleiß des Tragteils 20 hierdurch reduziert. Denkbar ist es auch, als zusätzliches Mittel Kohlenstoff in dem Kunststoff einzusetzen. Auch mit diesem Zusatzstoff ergibt sich eine Verbesserung des Verschleißverhaltens.

Es ist denkbar, das Tragteil 20 anstatt aus einem Polymer aus Metall oder aus Keramik herzustellen. Es kann durch gießen, spritzen, umformen oder spanend hergestellt sein. Die Verwendung von Kunststoff weist gegenüber Tragteilen 20 aus Metall oder Keramik den Vorteil eines geringeren Gewichts auf. Dadurch reduziert sich das Gesamtgewicht des Gleitschutzstiftes 10, was bei einer Verwendung an einem Reifen eines Kraftfahrzeugs zu einer verringerten Beanspruchung des Straßenbelags führt.

Zu seiner Verwendung wird das Tragteil 20 in einer Oberfläche eines nicht gezeigten Reifens verankert, sodass der Kopfabschnitt 31 des Verschleißstiftes 30 aus der Reifenoberfläche herausragt. Durch den Flanschabschnitt 23 ist eine formschlüssige und kraftschlüssige Verbindung zwischen dem Tragteil 20 und dem Reifen ausgebildet, sodass sich der Gleitschutzstift 10 auch bei hohen einwirkenden Zentrifugalkräften nicht aus der Reifenoberfläche löst. Bei schnee- oder eisglatter Straße dringt der Kopfabschnitt 21 des Verschleißstiftes 30 in die Schnee- oder Eisschicht ein, wodurch eine gute Haftung des Reifens auf dem Untergrund erreicht wird. Dabei werden insbesondere bei einer Beschleunigung, beim Bremsen oder bei einer Kurvenfahrt hohe Kräfte auf den Verschleißstift 30 übertragen. Die Krafteinleitung in den Verschleißstift 30 erfolgt über den Kopfabschnitt 31. Es treten sowohl axial ausgerichtete Kräfte als auch Querkräfte auf, welche von dem Verschleißstift 30 auf das Tragteil 20 übertragen werden. Aufgrund der aus unterschiedlichen Richtungen einwirkenden Kräfte im Lebenszyklus eines Gleitschutzstiftes 10, insbesondere auch durch die Formgeometrie des Verschleißstiftes 30 und des Tragteils 20 im Neuzustand und eine sich verändernde Formgeometrie im Gebrauchtzustand, werden zusätzlich Rotationskräfte, welche in Umfangsrichtung um eine in Fig. 2a gezeigte Längsachse 42 des Verschleißstiftes 30 gerichtet sind, auf den Verschleißstift 30 übertragen. Auch diese Rotationskräfte müssen von dem Verschleißstift 30 auf das Tragteil 20 übertragen werden, ohne dass sich der Verschleißstift 30 innerhalb des Tragteils 20 um seine Längsachse 42 dreht.

Fig. 2a zeigt in einer Seitenansicht einen Verschleißstift 30 mit polygonförmigem Querschnitt und einer Anordnung von Vertiefungen 35. Fig. 2b zeigt in einer Draufsicht den in Fig. 2a gezeigten Verschleißstift 30. Wie insbesondere Fig. 2b zu entnehmen ist, ist der Querschnitt des Verschleißstiftes 30 achteckig ausgebildet. Eine Umfangsfläche 34 des Verschleißstiftes 30 bildet entsprechend acht im Winkel zueinander angeordnete Teilflächen 34.1, 34.2, 34.3, 34.4, 34.5, 34.6, 34.7, 34.8 aus. Die Teilflächen 34.1, 34.2, 34.3, 34.4, 34.5, 34.6, 34.7, 34.8 sind um die entlang seiner Längserstreckung verlaufende Längsachse 42 des Verschleißstiftes angeordnet. Die erste und die ihr gegenüberliegende fünfte Teilfläche 34.1, 34.5 sind gegenüber den unmittelbar benachbarten zweiten, vierten, sechsten, und achten Teilflächen 34.2, 34.4, 34.6, 34.8 sowie den zwischen der zweiten und der vierten Teilfläche 34.2, 34.4 angeordneten dritten Teilfläche 34.3 und der zwischen der sechsten und der achten Teilfläche 34.6, 34.8 angeordneten siebten Teilfläche 34.7 in Umfangsrichtung gemessen verlängert ausgebildet. Zwischen der dritten und der siebten Teilfläche 34.3, 34.7 bilden der Kopfabschnitt 31 und der gegenüberliegende Fußabschnitt 33 einen abgeflachten Grat aus, welcher seitlich zu der ersten und der fünften Teilfläche 34.1, 34.5 hin schräg in Richtung zum Schaftabschnitt 32 hin geneigt abfällt.

Die Teilflächen 34.1, 34.2, 34.3, 34.4, 34.5, 34.6, 34.7, 34.8 bilden in Umfangsrichtung aufeinanderfolgende Abschnitte der Umfangsfläche 34 aus. Diese Abschnitte erstrecken sich in dem gezeigten Ausführungsbeispiel von dem Kopfabschnitt 31 über den Schaftabschnitt 32 bis hin zu dem Fußabschnitt 33.

In die erste Teilfläche 34.1 und die gegenüberliegende fünfte Teilfläche 34.5 sind im Bereich des Schaftabschnittes 32 Vertiefungen 35 eingeformt. Die Vertiefungen 35 sind als längliche, geradlinig verlaufende Rillen ausgebildet. Sie sind entlang ihrer Längserstreckung quer zur Längsachse 42 ausgerichtet. Die Vertiefungen 35 sind schräg zur Längsachse 42 ausgerichtet. Sie nehmen zur Längsachse 42 einen Winkel ein, der kleiner 90° und größer 60° ist. Die Vertiefungen 35 erstrecken sich über die gesamte, quer zur Längsachse gemessene Breite der ersten und der fünften Teilfläche 34.1, 34.5. Sie ragen somit endseitig in die jeweils benachbarten Abschnitte der Umfangsfläche 34, also in die zweite und die achte Teilfläche 34.2, 34.8 bzw. in die vierte und sechste Teilfläche 34.4, 34.6 hinein.

Die Vertiefungen 35 weisen gegenüber ihrer Umgebung eine in Fig. 2b durch einen Doppelpfeil gekennzeichnete Tiefe 40 auf. Als Bezugspunkt zur Bemessung der Tiefe 40 dient die geradlinige Verbindung der Oberfläche der ersten bzw. der fünften Teilfläche 34.1, 34.5 außerhalb der Vertiefungen. Dies ist vorliegend die Position der ersten bzw. der fünften Teilfläche 34.1, 34.5 im Bereich des Kopfabschnitts 31 und des Fußabschnitt 33. Die zwischen den Vertiefungen 35 ausgebildeten Bereiche liegen in ihren Maxima auf der Höhe dieser geradlinigen Verbindung oder geringfügig darunter. Die Tiefe 40 der Vertiefungen 35 liegt in einem Bereich von 0 und 1 mm. Wie insbesondere Fig. 2a zu entnehmen ist, sind die Vertiefungen 35 und die zwischen den Vertiefungen 35 angeordneten Bereiche abgerundet ausgebildet. Scharfe Kanten sind vermieden.

Innerhalb der ersten und innerhalb der fünften Teilfläche 34.1, 34.5 sind die Vertiefungen 35 jeweils gleich ausgerichtet. Entlang der Längsachse 42 des Verschleißstiftes 30 aufeinanderfolgende Vertiefungen 35 sind gleich zueinander beabstandet. In Blickrichtung auf die fünfte Teilfläche 34.5 sind die auf der fünften Teilfläche 34.5 angeordneten Vertiefungen 35 und die auf der ersten Teilfläche 34.1 angeordneten Vertiefungen gegenläufig zueinander geneigt. In Projektion der ersten Teilfläche 34.1 auf die fünfte Teilfläche 34.5 kreuzen sich die aufeinander projizierten Vertiefungen 35.

Die Teilflächen 34.1, 34.2, 34.3, 34.4, 34.5, 34.6, 34.7, 34.8 sind jeweils entlang ihrer Längserstreckung gleichbleibend weit von der Längsachse 42 beabstandet. Der Kopfabschnitt 31 und der Fußabschnitt 33 weisen entsprechend gleiche Querschnittsflächen auf.

Zur Herstellung eines Gleitschutzstiftes 10, wie er in Fig. 1 gezeigt ist, wird der in Fig. 2a und 2b gezeigte Verschleißstift 30 in das Tragteil 20 eingebettet. Dies kann bei einem aus Kunststoff hergestellten Tragteil 20 durch Spritzgießen erfolgen. Es ist jedoch auch denkbar, den Verschleißstift 30 in ein aus einem vorzugsweise duktilen Material, beispielsweise einem Metall, hergestelltes Tragteil 20 einzupressen.

Beim Aneinanderfügen des Verschleißstiftes 30 und des Tragteils 20 dringt Material des Tragteils 20 in die Vertiefungen 35 des Verschleißstiftes 30 ein. Es bilden sich somit zwischen dem Tragteil 20 und dem Verschleißstift 30 Formschlussverbindungen aus, welche eine Bewegung des Verschleißstiftes 30 gegenüber dem Tragteil 20 blockieren.

Durch die Ausrichtung der Vertiefungen 35 quer zur Längsachse 42 sind in Richtung der Längsachse 42 wirkende Formschlussverbindungen ausgebildet. Dadurch ist eine axiale Bewegung des Verschleißstiftes 30 gegenüber dem Tragteil 20 blockiert. Diese im Einsatz an einem Reifen radial wirkenden Formschlussverbindungen bewirken, dass der Verschleißstift 30 auch bei hohen Umdrehungsgeschwindigkeiten eines Reifens und damit bei hohen Zentrifugalkräften oder bei hohen radial nach innen gerichteten Druckkräften sicher von dem Tragteil 20 gehalten wird.

Die Vertiefungen 35 sind in Umfangsrichtung geteilt. Es sind daher keine in Umfangsrichtung durchgängigen Vertiefungen 35 ausgebildet. Durch die Unterbrechungen der Vertiefungen 35 bilden sich in Umfangsrichtung wirkende Formschlussverbindungen aus. Diese blockieren vorteilhaft eine Drehbewegung des Verschleißstiftes 30 gegenüber dem Tragteil 20 um seine Längsachse 42. Insbesondere bei einem im Betrieb einseitig abgenutzten Kopfabschnitt 31 des Verschleißstiftes 30 können in Umfangsrichtung wirkende Kräfte auf den Verschleißstift 30 übertragen werden. Bei bekannten Verschleißstiften 30 mit durchgängigen Vertiefungen 35, die beispielsweise umlaufend in einer Ebene oder spiralförmig umlaufend zur Längsachse 42 ausgebildet sein können, bilden die Vertiefungen 35 keine zumindest anteilig in Umfangsrichtung ausgerichteten Kontaktflächen zwischen dem Verschleißstift 30 und dem Tragteil 20 aus. In Umfangsrichtung wirkende Kräfte können somit lediglich durch die äußere, beispielsweise polygonförmige Kontur des Verschleißstiftes 30 oder durch ein geeignet geformtes Fußteil des Verschleißstiftes 30 abgefangen werden. Durch die erfindungsgemäßen in Umfangsrichtung geteilten Vertiefungen 35 werden in jedem Endbereich der Vertiefungen 35 solche zumindest anteilig in Umfangsrichtung ausgerichteten Kontaktflächen zwischen dem Verschleißstift 30 und dem Tragteil 20 geschaffen.

Durch die gegenüber der Längsachse und der Umfangsrichtung schräge Ausrichtung der Vertiefungen sind zusätzliche, in Umfangsrichtung blockierend wirkende Kontaktflächen zwischen dem Verschleißstift 30 und dem Tragteil 20 ausgebildet, welche eine Drehbewegung des Verschleißstiftes 30 um seine Längsachse 42 behindern.

Durch Vorgabe des Winkels, den die Vertiefungen 35 entlang ihrer Längserstreckung zu der Längsachse 42 bzw. zur Umfangsrichtung einnehmen, kann die Ausrichtung der zwischen dem Verschleißstift 30 und dem Tragteil 20 im Bereich der Vertiefungen 35 ausgebildeten Kontaktflächen beeinflusst werden. So verbessert sich bei kleinen zwischen der Längserstreckung der Vertiefungen 35 und der Längsachse 42 des Verschleißstiftes 30 ausgebildeten Winkeln die blockierende Wirkung der Formschlussverbindungen in Umfangsrichtung. Hin zu großen, zwischen den Längserstreckungen der Vertiefungen 35 und der Längsachse 42 des Verschleißstiftes 30 ausgebildeten, Winkeln steigt der Anteil der in Achsrichtung ausgerichteten Kontaktflächen, was zu einer verbesserten Formschlussverbindung in Achsrichtung führt. Eine gute sowohl in Achsrichtung wie auch in Umfangsrichtung wirkende Formschlussverbindung wird erreicht, wenn der Winkel zwischen der Längserstreckung der Vertiefungen 35 und der Längsachse 42 des Verschleißstiftes 30 in einem Bereich von 60° bis 90° liegt. In diesem Winkelbereich wird dem Umstand in optimierter Weise Rechnung getragen, dass auf den Verschleißstift 30 während des Betriebs wechselnde Kräfte in axialer Richtung und in Umfangsrichtung einwirken.

Durch die große Anzahl von in Achsrichtung benachbarter Vertiefungen 35 werden entsprechend viele blockierend wirkende Kontaktflächen zwischen dem Verschleißteil 30 und dem Tragteil 20 ausgebildet. Dadurch reduziert sich bei einer gegebenen einwirkenden Kraft die sich ausbildende Flächenpressung und damit die Gefahr einer Deformation des im Vergleich zu dem Verschleißstift 30 weicheren Materials des Tragteils 20.

Zusätzlich zu den in Umfangsrichtung geteilten Vertiefungen 35 führt auch die polygonförmige Außenkontur des Verschleißstiftes 30 mit den zwischen den Teilflächen 34.1, 34.2, 34.3, 34.4, 34.5, 34.6, 34.7, 34.8 ausgebildeten Kanten zu einer Blockierung von Drehbewegungen. Dieser Effekt wird durch die verlängerte Ausbildung der ersten und der fünften Teilfläche 34.1, 34.5 verstärkt.

Durch die abgerundete Kontur der Vertiefungen 35 und der Übergänge zwischen benachbarten Vertiefungen 35 sind scharfe Kanten und damit Kerbwirkungen sowohl am Verschleißstift 30 wie auch an dem umgebenden Tragteil 20 vermieden.

In dem in Fig. 2a und 2b gezeigten Ausführungsbeispiel sind der Kopfabschnitt 31 und der Fußabschnitt 33 gleich ausgebildet. Der Schaftabschnitt 32 weist, abgesehen von den Einbuchtungen durch die Vertiefungen 35, keine Kontur- oder Querschnittsveränderung entlang seiner Längserstreckung auf. Die Vertiefungen 35 sind an gegenüberliegenden Abschnitten der Umfangsfläche 34 in Projektion gegenläufig zueinander geneigt angeordnet. Durch diese Ausbildung des Verschleißstiftes bilden sich quer und entlang der Längsachse 42 Symmetrieebenen aus, welche eine Montage des Verschleißstiftes 30 in unterschiedlichen Ausrichtungen ermöglicht. So können beim Einbetten des Verschleißstiftes 30 in das Tragteil 20 beide gegenüberliegenden Enden des Verschleißstiftes 30 als Kopfabschnitt 31 oder als Fußabschnitt 33 vorgesehen werden. Die die Vertiefungen 35 tragenden ersten und fünften Teilflächen 34.1, 34.5 sind mit ihren jeweils benachbarten Abschnitten rotationssymmetrisch zueinander ausgebildet, sodass auch in Umfangsrichtung zwei gleichwertige Ausrichtungen des Verschleißstiftes 30 möglich sind. Dies vereinfacht deutlich die Herstellung des Gleitschutzstiftes 10, da beim Einbetten des Verschleißstiftes 30 in das Tragteil 20 beispielsweise nicht zwischen dem Kopf- und dem Fußabschnitt 31, 33 unterschieden werden muss. Da entlang der Längsachse 42 nur eine Symmetrieebene vorliegt, kann der an dem Kopfabschnitt 31 ausgebildete Grat nach Vorgabe zur Laufrichtung eines Reifens ausgerichtet werden. So kann der Grat beispielsweise quer zur Umfangsrichtung eines Reifens angeordnet sein, um einen verbesserten Eingriff des Verschleißstiftes 30 bei einem Brems- oder Beschleunigungsvorgang in eine glatte Straßenoberfläche zu erreichen.

Die Vertiefungen 35 sind vorteilhaft im Bereich des Schaftabschnittes 32 des Verschleißstiftes 30 angeordnet. Die dadurch ausgebildeten Formschlussverbindungen zwischen dem Verschleißstift 30 und dem Tragteil 20 können so bis in unmittelbare Nähe zu der Außenfläche 22 als äußerem Abschluss des Tragteils 20 herangeführt werden. Es ergibt sich dadurch ein kurzer Hebelarm zwischen dem Kopfabschnitt 31 als Krafteinleitungspunkt beim Betrieb des Verschleißstiftes 30 in einem Reifen und den der Reifenoberfläche zugewandten Formschlussverbindungen. Kippbewegungen des Verschleißstiftes 30 innerhalb des Tragteils 20 quer zu seiner Längsachse 42 können so vermieden werden.

Die Tiefe 40 der Vertiefungen 35 ist derart gewählt, dass die von ihnen ausgebildeten Formschlussverbindungen auch bei unterschiedlichem Schrumpf des zur Herstellung des Tragteils 20 verwendeten Materials und des Materials des Verschleißstiftes 30 bei der Herstellung des Gleitschutzstiftes 10 erhalten bleiben. Durch einen solchen unterschiedlichen Schrumpf, wie er beispielsweise bei einem aus Hartmetall hergestellten Verschleißstift 30 und einem aus Kunststoff hergestellten Tragteil 20 auftreten kann, kann sich zwischen dem Verschleißstift 30 und dem Tragteil 20 ein Spalt bilden. Die Tiefe 40 der Vertiefungen 35 ist so ausgelegt, dass dieser Spalt sicher überbrückt ist und die Formschlussverbindung bestehen bleibt. Auch durch unterschiedliche thermische Dehnung der verbundenen Materialien kann sich bei Temperaturwechsel ein solcher Spalt ausbilden, wobei durch die gewählte Tiefe 40 der Vertiefungen 35 die Formschlussverbindungen erhalten bleiben. Die maximale Tiefe 40 der Vertiefungen 35 ist so gewählt, dass bei üblichen Querschnitten des Verschleißstiftes 35 eine ausreichende Materialstärke verbleibt, um den Verschleißstift 35 nicht zu schwächen.

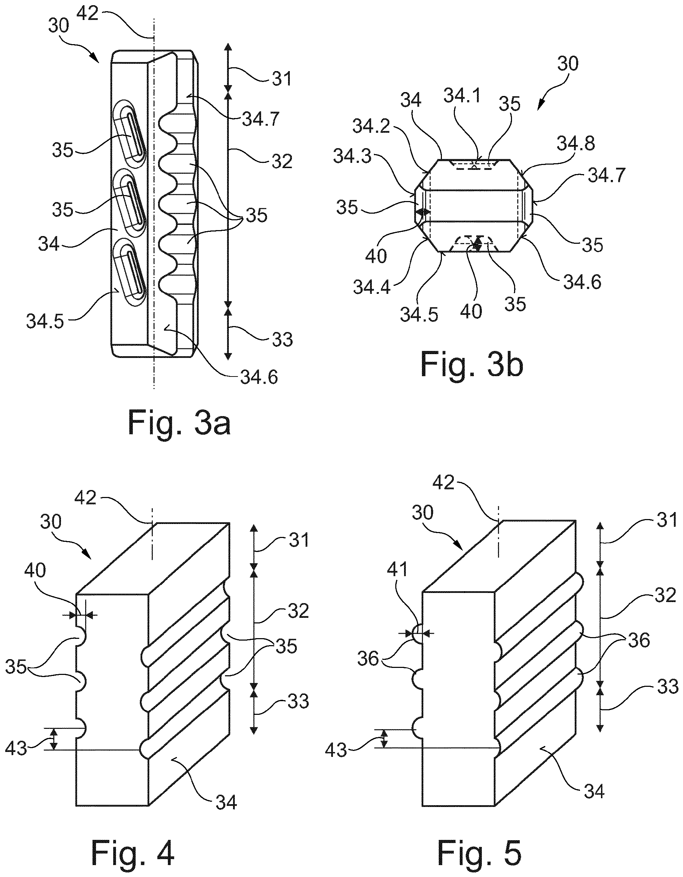

Fig. 3a zeigt in einer Seitenansicht einen Verschleißstift 30 mit polygonförmigem Querschnitt und einer weiteren Anordnung von Vertiefungen 35. Fig. 3b zeigt in einer Draufsicht den in Fig. 3a gezeigten Verschleißstift 30. Die Kontur des Verschleißstiftes 30, sein Kopfabschnitt 31 und sein Fußabschnitt 33 sowie das verwendete Material entsprechen dem in den Fig. 2a und 2b gezeigten Verschleißstift 30, auf dessen entsprechende Beschreibung hiermit verwiesen wird.

In die erste, die dritte, die fünfte und die siebte Teilfläche 34.1, 34.3, 34.5, 34.7 sind Vertiefungen 35 eingeformt. Die in die dritte und die gegenüberliegende siebte Teilfläche 34.3, 34.7 eingeformten Vertiefungen 35 sind quer zur Längsachse 42 des Verschleißstiftes 30 ausgerichtet und mit ihren offenen Enden in die jeweils benachbarte zweiten und vierten Teilflächen 34.2, 34.4 bzw. sechsten und achten Teilflächen 34.6, 34.8 geführt. In dem gezeigten Ausführungsbeispiel sind die in die dritte und die siebte Teilfläche 34.3, 34.7 eingebrachten Vertiefungen 35 entlang ihrer Längserstreckung senkrecht zur Längsachse 42 und damit in Umfangsrichtung ausgerichtet. Die in die erste und die gegenüberliegende fünfte Teilfläche 34.1, 34.5 eingeformten Vertiefungen 35 sind als längliche Mulden ausgebildet. Sie sind endseitig geschlossen und reichen somit nicht in die in Umfangsrichtung benachbarten Abschnitte des Verschleißstiftes 30. Die in die erste und die gegenüberliegende fünfte Teilfläche 34.1, 34.5 eingeformten Vertiefungen 35 sind schräg zur Längsachse 42 und damit auch schräg zur Umfangsrichtung des Verschleißstiftes 30 ausgerichtet. Im Vergleich zu den in Fig. 2a und Fig. 2b gezeigten Vertiefungen 35 sind die in Fig. 3a und Fig. 3b in die ersten und die fünfte Teilfläche 34.1, 34.5 eingeformten Vertiefungen 35 gegenüber der Längsachse 42 in einem kleineren Winkel ausgerichtet.

Auch bei den in Fig. 3a und Fig. 3b gezeigten Vertiefungen 35 sind diese in Umfangsrichtung geteilt, also nicht umlaufend zum Verschleißstift 30 ausgebildet. Dadurch ergeben sich, wie zu Fig. 2a und Fig. 2b ausgeführt, in Umfangsrichtung wirkende Formschlussverbindungen zwischen dem Verschleißstift 30 und dem in Fig. 1 gezeigten, den Verschleißstift 30 umgebenden Tragteil 20. Die in die dritte und die siebte Teilfläche 34.3, 34.7 eingeformten Vertiefungen 35 sind derart ausgerichtet, dass sie insbesondere in Achsrichtung gerichtete Kräfte abfangen. Die in die erste und die gegenüberliegende fünfte Teilfläche 34.1, 34.5 eingeformten Vertiefungen 35 sind durch ihre in spitzem Winkel zu der Längsachse 42 vorgesehene Ausrichtung für die Aufnahme von in Umfangsrichtung gerichteten Kräften optimiert. Der Verschleißstift 30 kann somit sowohl in Achsrichtung wie auch in Umfangsrichtung über Formschlussverbindungen fest mit einem umgebenden Tragteil 20, wie es in Fig. 1 gezeigt ist, verbunden werden.

Die Vertiefungen 35 sind mit den zu Fig. 2a und Fig. 2b beschriebenen Vorteilen abgerundet ausgebildet. Der Verschleißstift 30 weist quer und entlang der Längsachse 42 verlaufende Symmetrien auf, so dass er in mehreren gleichwertigen Ausrichtungen in das Tragteil 20 eingebettet werden kann. Dies ermöglicht eine einfache und kostengünstige Herstellung des Gleitschutzstiftes 10.

Fig. 4 zeigt in einer schematischen perspektivischen Darstellung einen rechteckigen Verschleißstift 30 mit quer verlaufenden Vertiefungen 35 an gegenüberliegenden langen Abschnitten der Umfangsfläche 34 des Verschleißstiftes 30.

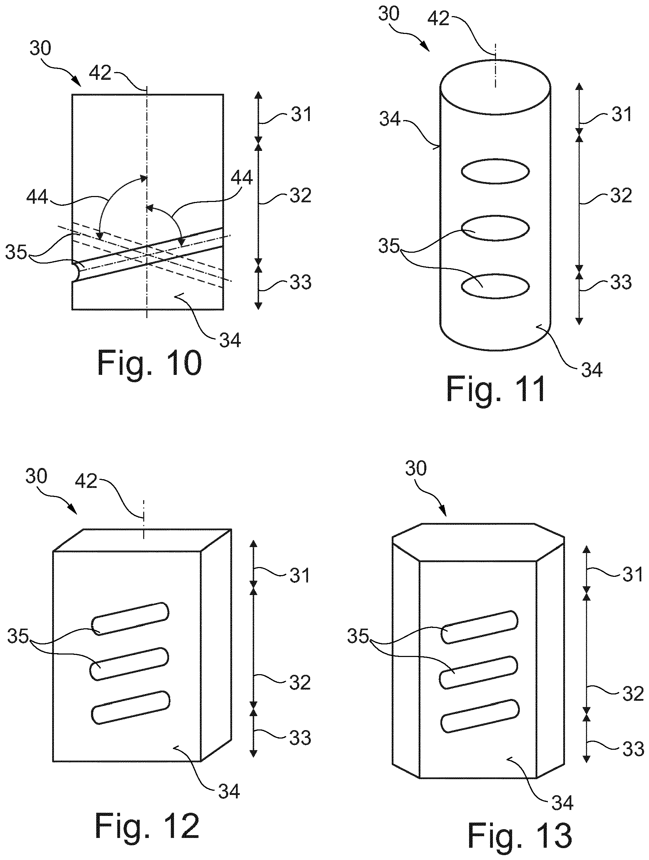

Die schematische rechteckige Außenkontur der in den Fig. 4 bis Fig. 10 sowie in den Fig. 12, 16 und 17 gezeigten Verschleißstiften 30 dient der vereinfachten Darstellung verschiedener Ausführungen und Anordnungen von Vertiefungen 35 und Erhebungen 36, wie sie an einem Verschleißstift 30 angeordnet sein können. Die dargestellten und beschriebenen Vertiefungen 35 und Erhebungen 36 können in ihrer Ausbildung und in ihren Eigenschaften auf andere Stiftgeometrien, beispielsweise auf die in den Fig. 2a, 2b, 3a, 3b gezeigte achteckige Stiftgeometrie, übertragen werden. Die gezeigten Verschleißstifte 30 sind jeweils entlang ihrer Längsachsen 42 in einen Kopfabschnitt 31, einen Schaftabschnitt 32 und einen Fußabschnitt 33 unterteilt, wie sie durch entsprechende Doppelpfeile gekennzeichnet sind. Es ist denkbar, den Kopfabschnitt 31 und dem Fußabschnitt 33 unterschiedlich auszuformen. So können beispielsweise am Fußabschnitt 33 zusätzliche Verankerungselemente angeformt sein.

Wie Fig. 4 zu entnehmen ist, sind die Vertiefungen 35 als kehlförmige Rinnen in die Umfangsfläche 34 eingeformt. Sie sind entlang der Längsachse 42 des Verschleißstiftes 30 gleich zueinander beabstandet. Sie sind können entlang ihrer Längserstreckung quer, vorliegend senkrecht, zur Längsachse 42 des Verschleißstiftes 30 ausgerichtet sein. Dadurch bilden sich zu einem umgebenden Material eines Tragteils 20, wie es in Fig. 1 gezeigt ist, Formschlussverbindungen aus, welche insbesondere zur Ableitung von axial auf den Verschleißstift 30 einwirkenden Kräften auf das Tragteil 20 und damit auf einen Mantel eines Reifens ausgelegt sind. Die innere Oberfläche der Vertiefungen 35 ist abgerundet ausgebildet, so dass Kerbwirkungen am Verschleißstift 30 oder einem Material eines umgebenden Tragteils 20 vermieden werden. Quer zu ihrer Längserstreckung gehen die Vertiefungen 35 über Kanten in die benachbarte Umfangsfläche 34 über. Solche scharfen Kanten führen zur Ausbildung von Formschlussverbindungen zu dem umgebenden Material eines Tragteils 20, welche hohe Kräfte übertragen können. Es ist jedoch auch denkbar, diese Übergänge abgerundet auszubilden, um auch hier Kerbwirkungen zu vermeiden.

Die Vertiefungen 35 sind endseitig offen und münden in die benachbarten, kurzen Abschnitte der Umfangsfläche 34. In Umfangsrichtung sind die Vertiefungen 35 unterbrochen. Dadurch bilden sich im Zusammenwirken mit einem beispielhaft in Fig. 1 gezeigten, umgebenden Tragteil 20 in Umfangsrichtung wirkende Formschlussverbindungen zwischen dem Verschleißstift 30 und dem umgebenden Tragteil 20 aus. Zusammen mit der rechteckigen Kontur des Verschleißstiftes 30 blockieren diese Formschlussverbindungen eine Drehbewegung des Verschleißstiftes 30 innerhalb eines Tragteils 20 um seine Längsachse 42.

Wie den Fig. 4, 6, 7, 10 zu entnehmen ist, sind die an den gegenüberliegenden Abschnitten der Umfangsfläche 34 angeordneten Vertiefungen 35 entlang der Längsachse 42 des Verschleißstiftes 30 um einen axialen Versatz 43 versetzt zueinander angeordnet. Dadurch ist vermieden, dass Vertiefungen 35 exakt gegenüberliegend in den Verschleißstift 30 eingeformt sind. Starke Querschnittsverengungen des Verschleißstiftes 30 durch gegenüberliegend angeordnete Vertiefungen 35 und eine damit verbundene Schwächung des Verschleißstiftes 30 können durch diese Anordnung vermieden werden.

Durch die Ausbildung der Vertiefungen 35 an den langen Abschnitten der Umfangsfläche 34 werden großflächige Formschlussverbindungen zu einem umgebenden Tragteil 20 ermöglicht. Diese können große Kräfte übertragen, ohne dass sich das insbesondere weichere Material des Tragteils 20 durch eine zu große Flächenpressung deformiert. Durch die ausgebildeten Formschlussverbindungen entlang der langen Abschnitte wird ein Verkippen des Verschleißstiftes 30 insbesondere über die langen Kanten des Kopf- bzw. Fußabschnittes 31, 33 blockiert.

Die Vertiefungen 35 können beispielsweise entlang ihrer Längserstreckung eine gleichbleibende Kontur, also eine gleichbleibende Form und eine gleichbleibende Tiefe 40, aufweisen. Dabei verlaufen die Vertiefungen 35 entlang ihrer Längserstreckung geradlinig. Es ist jedoch auch denkbar, dass sich die Form und/oder die Tiefe 40 der Vertiefungen 35 entlang ihrer Längserstreckung verändern und/oder dass die Vertiefungen 35 entlang ihrer Längserstreckung gebogen, gekrümmt oder geknickt verlaufen. Durch eine solche Änderung der Form, der Tiefe 40 und/oder des Verlaufs der Vertiefungen 35 entlang ihrer Längserstreckung können die ausgebildeten Formschlussverbindungen zu einem umgebenden Tragteil 20 an die jeweils erwarteten Anforderungen angepasst werden, indem die einander blockierenden Kontaktflächen durch die Wahl der Form, der Tiefe 40 und/oder des Verlaufs der Vertiefungen 35 geeignet ausgerichtet werden.

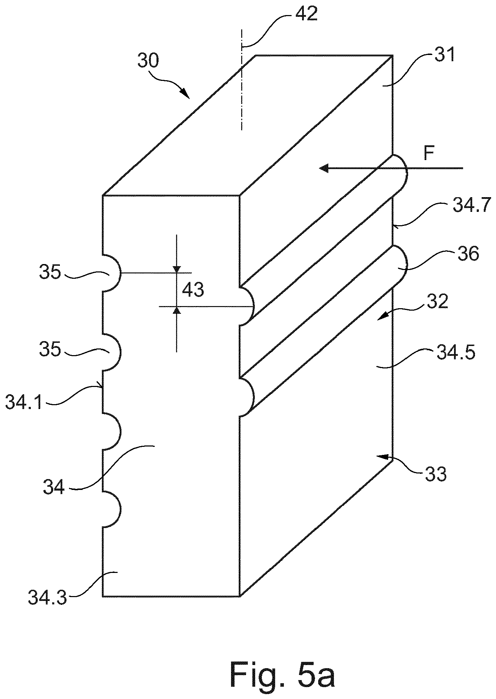

In den Verschleißstift 30 als Formschlusselement eingebrachte Vertiefungen weisen gegenüber Erhebungen 36, wie sie in Fig. 5 gezeigt sind, den Vorteil einer Materialeinsparung bei der Herstellung des Verschleißstiftes 30 auf. Dies ist insbesondere bei der Herstellung von Verschleißstiften 30 in großer Stückzahl aus vergleichsweise teuren Materialien, wie vorliegend aus Hartmetall, relevant.

Fig. 5 zeigt in einer schematischen perspektivischen Darstellung einen rechteckigen Verschleißstift 30 mit quer verlaufenden Erhebungen 36 an gegenüberliegenden langen Abschnitten der Umfangsfläche 34 des Verschleißstiftes 30. Die Erhebungen 36 erheben sich dabei um eine durch Pfeile gekennzeichnete Höhe 41 gegenüber der umgebenden Umfangsfläche 34.

Die Erhebungen 36 sind wulstförmig mit zur Vermeidung von Kerbwirkungen abgerundeten Oberflächen ausgebildet. Die Übergänge in die umgebende Umfangsfläche 34 sind vorliegend scharfkantig ausgebildet. Es ist jedoch auch denkbar, zur Vermeidung von Kerbwirkungen abgerundete Übergänge vorzusehen. Die Erhebungen 36 verlaufen entlang ihrer Längserstreckung bei gleichbleibender Außenkontur und Höhe 41 geradlinig. Es ist denkbar, die Höhe 41, die Form und/oder die Ausrichtung der Erhebungen 36 entlang ihrer Längserstreckung unterschiedlich auszubilden, um Einfluss auf die ausgebildeten Formschlussverbindungen zu einem umgebenden Tragteil 20 zu nehmen. Die Erhebungen 36 sind untereinander entlang der Längsachse 42 des Verschleißstiftes 30 äquidistant angeordnet. In Umfangsrichtung sind die Erhebungen 36 geteilt. Durch die Ausrichtung der Erhebungen 36 quer, vorliegend senkrecht, zur Längsachse 42 des Verschleißstiftes 30, werden durch die Erhebungen 36 Formschlussverbindungen zu einem umgebenden Tragteil 20 ausgebildet, welche insbesondere zur Aufnahme von axial ausgerichteten Kräften optimiert sind. Die Unterbrechung der Erhebungen 36 in Umfangsrichtung ergibt in Umfangsrichtung wirkende Formschlussverbindungen zwischen dem Verschleißstift 30 und dem Tragteil 20, wie es beispielhaft in Fig. 1 gezeigt ist. Bei fertiggestelltem Gleitschutzstift 10 ist der Verschleißstift 30 somit sowohl axial wie auch in Umfangsrichtung blockiert von dem Tragteil 20 gehalten. Dabei wird die in Umfangsrichtung wirkende Blockade durch die rechteckige Formgebung des Verschleißstiftes 30 unterstützt.

Die an den gegenüberliegenden, langen Abschnitten des Verschleißstiftes 30 angeformten Erhebungen 36 sind in Achsrichtung versetzt zueinander angeordnet. Der axiale Versatz 43 ist an zwei Erhebungen 36 durch einen Doppelpfeil gekennzeichnet. Durch den axialen Versatz 43 werden entlang der Längsachse 42 ein gleichbleibender oder zumindest ein annähernd gleichbleibender Querschnitt und damit eine zumindest annähernd gleichbleibende Festigkeit des Verschleißstiftes 30 erreicht.

Gegenüber als Formschlusselemente eingebrachten Vertiefungen 35 weisen Erhebungen 36 den Vorteil auf, dass sie zu keiner Querschnittsverjüngung und damit zu einer geringen Materialschwächung des Verschleißstiftes 30 führen.

Durch die ausgebildeten Formschlussverbindungen entlang der langen Abschnitte wird ein Verkippen des Verschleißstiftes 30 insbesondere über die langen Kanten des Kopf- bzw. Fußabschnittes 31, 33 blockiert.

In den in Fig. 4 und Fig. 5 gezeigten Ausführungen sind die Vertiefungen 35 bzw. Erhebungen 36 im Schaftabschnitt 32 des jeweiligen Verschleißstiftes 30 angeordnet. Es ergeben sich so mehrere Formschlussverbindungen zwischen dem Verschleißstift 30 und einem umgebenden Tragteil 20, welche bis nahe an den Kopfabschnitt 31 des Verschleißstiftes 30 und damit den Krafteinleitungspunkt bei der Verwendung des Gleitschutzstiftes 10 an einem Reifen herangeführt sind. Durch die große Anzahl und Formschlussverbindungen können hohe auf den Verschleißstift 30 im Betrieb einwirkende Kräfte abgefangen werden. Dabei wird durch den geringen Hebel zwischen dem Kopfabschnitt 31 und den dem Kopfabschnitt 31 zugewandten Formschlussverbindungen ein Verkippen des Verschleißstiftes 30 innerhalb des Tragteils 20 auch bei hohen, auf den Kopfabschnitt 31 einwirkenden Querkräften vermieden.

Fig 5a. zeigt in einer schematischen Darstellung eine gegenüber den Figuren 4 und 5 abgewandelte Ausgestaltung eines Verschleißstifts 30. Wie diese Darstellung erkennen lässt, sind auf einer Seite des Verschleißstifts 30 Erhebungen 36 und auf der gegenüberliegenden Seite Vertiefungen 35 vorgesehen sind. Hinsichtlich der Form, Anordnung und Gestaltungsvarianten der Erhebungen 36 bzw. der Vertiefungen 35 wird zur Vermeidung von Wiederholungen auf die vorstehenden Ausführungen zu den Figuren 4 und 5 verwiesen. Mit einer solchen Gestaltung eines Verschleißstifts 30 wird eine verbesserte Fixierung im Tragteil 20 erreicht. Insbesondere ist dabei ein verbesserter Halt des Verschleißstifts 30 gegen Kippen, insbesondere bei Bremsen und Beschleunigen oder Kurvenfahrt während des Fahreinsatzes erreicht. Dies gilt insbesondere dann, wenn der Verschleißstifts 30 im Reifen so montiert wird, dass die Seiten, welche die Vertiefungen 35 bzw. die Erhebungen 36 aufweisen quer zur Fahrtrichtung F angeordnet sind, wie dies Figur 5 veranschaulicht.

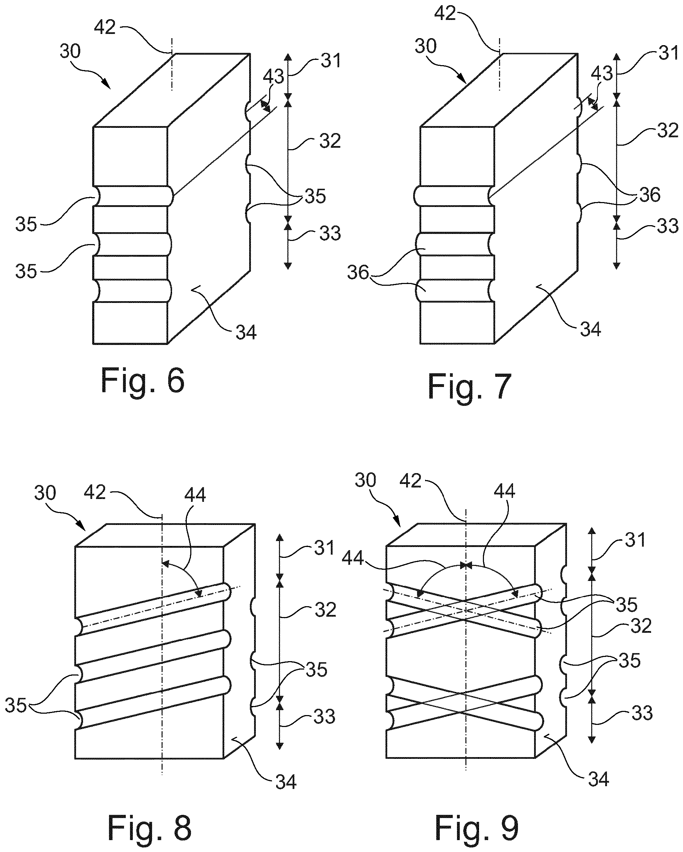

Fig. 6 zeigt in einer schematischen perspektivischen Darstellung einen rechteckigen Verschleißstift 30 mit quer verlaufenden Vertiefungen 35 an gegenüberliegenden kurzen Abschnitten der Umfangsfläche 34 des Verschleißstiftes 30. Die kehlförmig mit einem abgerundeten Boden und geradlinig verlaufend ausgebildeten Vertiefungen 35 sind quer, vorliegend senkrecht, zur Längsachse 42 des Verschleißstiftes 30 ausgerichtet. Dabei sind die Vertiefungen 35 innerhalb des Schaftabschnittes 32 des Verschleißstiftes 30 angeordnet. Auf den gegenüberliegenden Abschnitten des Verschleißstiftes 30 eingeformte Vertiefungen 35 sind entlang der Längsachse 42 des Verschleißstiftes 30 um einen axialen Versatz 43 zueinander versetzt angeordnet, wodurch eine unzulässig hohe Reduzierung der Querschnittsfläche des Verschleißstiftes 30 vermieden wird.

Durch die ausgebildeten Formschlussverbindungen entlang der kurzen Abschnitte wird ein Verkippen des Verschleißstiftes 30 insbesondere über die kurzen Kanten des Kopf- bzw. Fußabschnittes 31, 33 blockiert.

Fig. 7 zeigt in einer schematischen perspektivischen Darstellung einen rechteckigen Verschleißstift 30 mit quer verlaufenden Erhebungen 36 an gegenüberliegenden kurzen Abschnitten der Umfangsfläche 34 des Verschleißstiftes 30. Die wulstförmigen Erhebungen sind quer, vorliegend senkrecht, zur Längsachse 42 des Verschleißstiftes 30 ausgerichtet. Entlang der Längsachse 42 sind benachbarte Erhebungen 36 gleich zueinander beabstandet. Auf den gegenüberliegenden Abschnitten der Umfangsfläche 34 angeordnete Erhebungen 36 sind um einen axialen Versatz 43 entlang der Längsachse 42 zueinander versetzt. In Umfangsrichtung sind die Erhebungen 36 unterbrochen.

Die derart ausgebildeten Erhebungen 36 bilden zu einem umgebenden Tragteil 20, wie es beispielhaft in Fig. 1 gezeigt ist, Formschlussverbindungen aus, welche sowohl eine axiale Bewegung wie auch eine Drehbewegung des Verschleißstiftes 30 innerhalb eines Tragteils 20 blockieren. Durch die Anordnung der Erhebungen auf den quer zur Längsachse 42 gemessen kurzen Abschnitten der Umfangsfläche 34 wird eine Kippbewegung des Verschleißstiftes 30 über seine kurzen Kanten blockiert.

Fig. 8 zeigt in einer schematischen perspektivischen Darstellung einen rechteckigen Verschleißstift 30 mit schräg verlaufenden Vertiefungen 35 an gegenüberliegenden langen Abschnitten der Umfangsfläche 34 des Verschleißstiftes 30.

Die Vertiefungen 35 sind als geradlinig verlaufende, kehlförmige Rinnen ausgebildet. Sie sind entlang ihrer Längserstreckung in einem Winkel 44 schräg zur Längsachse 42 des Verschleißstiftes 30 ausgerichtet. Endseitig münden die Vertiefungen 35 in die kurzen Abschnitte der Umfangsfläche 34. Die Vertiefungen 35 sind entlang der Längsachse 42 beabstandet zueinander angeordnet und in Umfangsrichtung geteilt. An den gegenüberliegenden langen Abschnitten der Umfangsfläche 34 angeordnete Vertiefungen 35 sind in Achsrichtung versetzt zueinander angeordnet.

Durch die schräge Anordnung der Vertiefungen 35 zu der Längsachse 42 wird im Vergleich zu den senkrecht ausgerichteten Vertiefungen 35, wie sie in Fig. 4 gezeigt sind, ein verbesserter in Umfangsrichtung wirkender Formschluss zwischen dem Verschleißstift 30 und einem den Verschleißstift 30 umgebenden Tragteil 20, wie es beispielhaft in Fig. 1 gezeigt ist, erreicht. Gleichzeitig können durch die Ausrichtung der Vertiefungen 35 quer zur Längsachse 42 auch hohe, axial auf den Verschleißstift 30 einwirkende Kräfte sicher an das Tragteil 20 abgeleitet werden. Durch den axialen Versatz 43 der gegenüberliegend angeordneten Vertiefungen 35 ist eine unzulässige Verjüngung des Querschnitts des Verschleißstiftes 30 vermieden.

Fig. 9 zeigt in einer schematischen perspektivischen Darstellung einen rechteckigen Verschleißstift 30 mit gekreuzt angeordneten Vertiefungen 35 an gegenüberliegenden langen Abschnitten der Umfangsfläche 34 des Verschleißstiftes 30. Die geradlinig verlaufenden Vertiefungen 35 erstrecken sich quer zur Längsachse 42 über die gesamte Breite der langen Seiten des Verschleißstiftes 30, sodass sie endseitig in die kurzen Abschnitte der Umfangsfläche 34 einmünden. Die Vertiefungen 35 sind entlang ihrer Längserstreckung derart in einem Winkel 44 gegenüber der Längsachse 42 geneigt, dass sich jeweils zwei Vertiefungen 35 in einem entlang der Längsachse 42 verlaufenden Mittenbereich der langen Abschnitte kreuzen. Durch eine solche symmetrische Ausbildung der Vertiefungen 35 wird ein Verkippen des Verschleißstiftes 30, beispielsweise bei axial eingeleiteten Kräften, gegenüber einem umgebenden Tragteil 20 vermieden.

Fig. 10 zeigt in einer Seitenansicht einen rechteckigen Verschleißstift 30 mit nicht deckungsgleich angeordneten Vertiefungen 35 an gegenüberliegenden langen Abschnitten der Umfangsfläche 34 des Verschleißstiftes 30. Eine in der gewählten Seitenansicht rückseitig angeordnete Vertiefungen 35 ist durch eine gestrichelte Linie gekennzeichnet. Auf jedem der gezeigten langen Abschnitte ist nur eine Vertiefung 35 dargestellt. Es ist jedoch denkbar, auf jedem der langen Abschnitte jeweils gleich ausgerichtete Vertiefungen 35 entlang der Längsachse 42 beabstandet zueinander innerhalb des Schaftabschnitts 32 anzuordnen.

Die Vertiefungen 35 sind in einem Winkel 44 zu der Längsachse 42 ausgerichtet. Dabei kann es vorgesehen sein, dass die Winkel 44 an den gegenüberliegenden Seiten gleich ausgebildet sind, wie Figur 10 zeigt. Denkbar ist es jedoch auch, dass auf den gegenüberliegenden Seiten unterschiedliche Winkel verwendet werden. Dabei sind die auf den gegenüberliegenden Abschnitten der Umfangsfläche 34 angeordneten Vertiefungen 35 in Projektion gekreuzt zueinander angeordnet. Durch die gekreuzte Anordnung der Vertiefungen 34 wird eine unzulässige Querschnittsverjüngung des Verschleißstiftes 30, wie sie bei gegenüberliegend angeordneten und in Projektion gleich ausgerichteten Vertiefungen 35 auftreten kann, und eine damit verbundene Schwächung des Verschleißstiftes 30 vermieden. Die in dem Winkel 44 schräg zur Längsachse 42 ausgerichteten Vertiefungen 34 ermöglichen die Ausbildung von sowohl in Achsrichtung wie auch in Umfangsrichtung wirksamen Formschlussverbindungen des Verschleißstiftes 30 zu einem umgebenden Tragteil 20.

Fig. 11 zeigt in einer schematischen perspektivischen Darstellung einen Verschleißstift 30 mit einer kreisrunden Querschnittsfläche. Entlang seiner Längsachse 42 sind Vertiefungen 35 in den Verschleißstift 30 eingeformt. Die Vertiefungen 35 weisen eine langgestreckte Form auf. Sie sind entlang ihrer Längserstreckung quer, vorliegend senkrecht, zur Längsachse 42 ausgerichtet. Denkbar ist es jedoch auch, dass die Vertiefungen 35 um einen Winkel verdreht zur Längsachse angeordnet sind. Auf einem gegenüberliegenden Abschnitt der Umfangsfläche 34 sind entlang der Längsachse 42 von dem Verschleißstift 30 verdeckt angeordnete, gleiche Vertiefungen in Achsrichtung beabstandet zueinander angeordnet. Die Vertiefungen 35 sind in Umfangsrichtung des Verschleißstiftes 30 geteilt. Durch die Vertiefungen 35 werden zu einem umgebenden Tragteil 20, in welches der Verschleißstift 30 eingeformt werden kann, in Achsrichtung sowie in Umfangsrichtung wirkende Formschlussverbindungen ausgebildet. Eine axiale Bewegung des Verschleißstiftes 35 sowie eine Drehbewegung des Verschleißstiftes 35 um seine Längsachse 42 innerhalb des Tragteils 20 wird auf diese Weise vermieden. Verschleißstifte 30 mit kreisrunden Querschnitten sind einfach und kostengünstig herstellbar. Eine rein zylinderförmige Außenkontur bildet jedoch keine formschlüssige Verbindung zu einem Tragteil 20 aus. Durch in Umfangsrichtung geteilte Vertiefungen 35 können sowohl in Umfangsrichtung wie auch axial wirkende Formschlussverbindungen zwischen dem Verschleißstift 30 mit im wesentlich zylindrischer Außenkontur und einem umgebenden Tragteil 20 realisiert werden. In Umfangsrichtung auf den Verschleißstift einwirkende Kräfte führen so nicht zu einer unerwünschten Drehung des Verschleißstiftes 30 innerhalb des Tragteils 20 um seine Längsachse 42.

Fig. 12 zeigt in einer schematischen perspektivischen Darstellung einen rechteckigen Verschleißstift 30 mit schräg angeordneten, verkürzten Vertiefungen 35 an gegenüberliegenden langen Abschnitten der Umfangsfläche 34 des Verschleißstiftes 30. Die Vertiefungen 35 sind als langgezogene Mulden in die in Umfangsrichtung gemessen langen Abschnitte der Umfangsfläche 34 des Verschleißstiftes 30 eingeformt. Sie sind entlang ihrer Längserstreckung schräg zur Längsachse 42 des Verschleißstiftes 30 ausgerichtet. Die Vertiefungen 35 sind endseitig innerhalb der langen Abschnitte der Umfangsfläche 34 abgeschlossen, sodass sie nicht in die benachbarten, in Umfangsrichtung gemessen kurzen Abschnitt der Umfangsfläche 34 ragen. Sie sind entlang der Längsachse 42 beabstandet zueinander angeordnet und in Umfangsrichtung geteilt ausgebildet. Wird ein derart ausgebildeter Verschleißstift 30 in ein Tragteil 20 eingeformt, so dringt Material des Tragteils 20 in die Vertiefungen 35 ein, sodass sich Formschlussverbindungen zwischen dem Verschleißstift 30 in dem Tragteil 20 Ausbildung. Diese wirken sowohl in axialer Richtung wie auch in Umfangsrichtung des Verschleißstiftes 30. Die Vertiefungen 35 sind innerhalb des Schaftabschnitts 32 des Verschleißstiftes 30 angeordnet. Es ist jedoch auch denkbar, Vertiefungen im Kopfabschnitt 31 oder im Fußabschnitt 33 vorzusehen.

Fig. 13 zeigt in einer schematischen perspektivischen Darstellung einen Verschleißstift 30 mit polygonförmigem Querschnitt und schräg angeordneten, verkürzten Vertiefungen 35 an gegenüberliegenden langen Abschnitten der Umfangsfläche 34 des Verschleißstiftes 30. Der Querschnitt des Verschleißstiftes 30 ist achteckig ausgebildet. Die Vertiefungen 35 sind entsprechend der Darstellung in Fig. 12 und der zugehörigen Beschreibung ausgebildet und in gegenüberliegend angeordnete, im Vergleich zu benachbarten Abschnitten in Umfangsrichtung gemessen lange Abschnitte der Umfangsfläche 34 eingeformt.

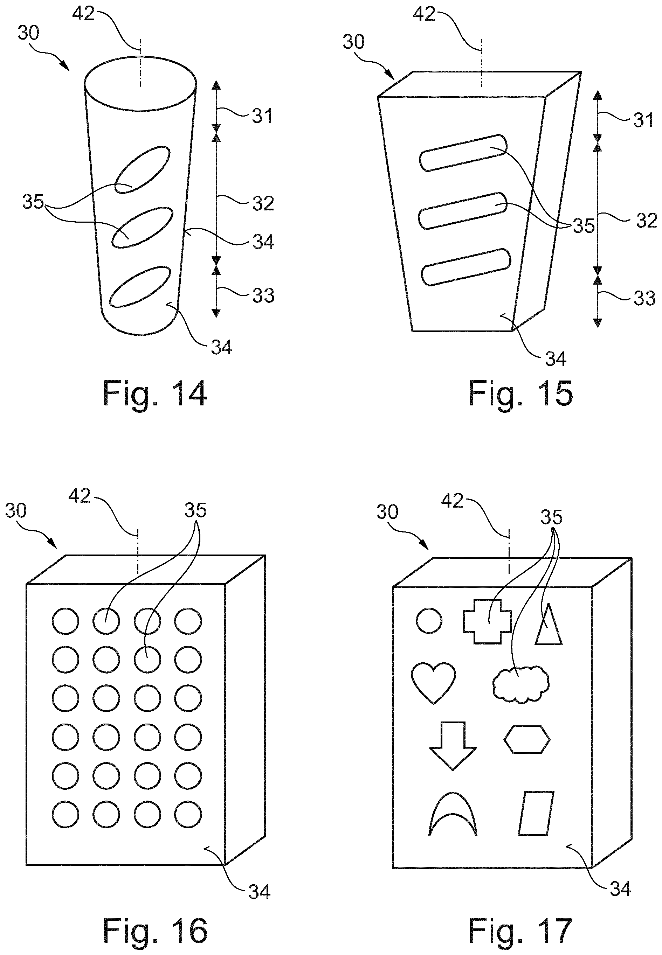

Fig. 14 zeigt in einer schematischen perspektivischen Darstellung einen konisch zulaufenden Verschleißstift 30 mit kreisrunden Querschnitt und schräg angeordneten Vertiefungen 35. Die Vertiefungen 35 sind entlang der Längsachse 42 des Verschleißstiftes 30 beabstandet zueinander angeordnet und schräg zur Längsachse 42 ausgerichtet. An einem gegenüberliegenden Abschnitt sind durch den Verschleißstift 30 verdeckt angeordnete Vertiefungen 35 in dessen Umfangsfläche 34 eingeformt. Durch seine konische Ausbildung kann der Verschleißstift 30 in ein Tragteil 20 eingepresst und kraftschlüssig in diesem gehalten werden. Zusätzlich zu dem Kraftschluss bilden sich durch die entlang der Längsachse 42 beabstandeten und in Umfangsrichtung geteilten Vertiefungen Formschlussverbindungen zwischen dem Verschleißstift 30 und dem Tragteil 20 aus, sodass eine Bewegung des Verschleißstiftes 30 innerhalb des Tragteils 20 auch bei hohen Belastungen unterbunden wird.

Fig. 15 zeigt in einer schematischen perspektivischen Darstellung einen sich verjüngenden Verschleißstift 30 mit rechteckigen Querschnitt und schräg angeordneten Vertiefungen 35. Die Vertiefungen 35 sind als langgezogene Mulden entlang der Längsachse 42 des Verschleißstiftes 30 beabstandet zueinander und entlang ihrer Längserstreckung schräg zu der Längsachse 42 ausgerichtet im Bereich des Schaftabschnittes 32 in die Umfangsfläche 34 des Verschleißstiftes 30 eingeformt. Auch ein derart ausgebildeter Verschleißstift 30 kann in ein Tragteil 20 kraftschlüssig eingepresst werden. Zusätzlich bilden sich entlang der Vertiefungen 35 formschlüssige Verbindungen zwischen dem Verschleißstift 30 und dem Tragteil 20 aus, welche sowohl in Umfangsrichtung wie auch axial wirken.

Fig. 16 zeigt in einer schematischen perspektivischen Darstellung einen rechteckigen Verschleißstift 30 mit kreisrund ausgebildeten Vertiefungen 35. Die Vertiefungen 35 sind entlang der Längsachse 42 und in Umfangsrichtung des Verschleißstiftes 30 beabstandet zueinander in die Umfangsfläche 34 des Verschleißstiftes 30 eingeformt. Dabei sind die Vertiefungen 35 an den gegenüberliegenden, in Umfangsrichtung gemessen langen Abschnitten der Umfangsfläche 34 vorgesehen.

Vorliegend ist der jeweilige Boden der Vertiefungen 35 abgerundet ausgebildet, um Kerbwirkungen zu vermeiden.

Durch ihre Teilung in Umfangsrichtung bilden die Vertiefungen 35 Formschlussverbindungen zu einem umgebenden Tragteil 20 aus, welche sowohl in Achsrichtung wie auch in Umfangsrichtung wirksam sind. Durch die Vielzahl an Vertiefungen 35 kann eine große Anzahl an Formschlussverbindungen zwischen dem Verschleißstift 30 und einem Tragteil 20 hergestellt werden, sodass hohe Kräfte von dem Verschleißstift 30 auf das Tragteil 20 des in Fig. 1 beispielhaft gezeigten Gleitschutzstiftes 10 abgeleitet werden können.

Es ist denkbar, auch in den in Umfangsrichtung gemessen kurzen Abschnitten der Umfangsfläche 34 des Verschleißstiftes 30 in Umfangsrichtung und in Achsrichtung beabstandet zueinander angeordnete Vertiefungen 35 einzuformen.

Fig. 17 zeigt in einer schematischen perspektivischen Darstellung einen rechteckigen Verschleißstift 30 mit einer Anordnung als unterschiedliche geometrische Figuren ausgebildeten Vertiefungen 35. Die gezeigten Figuren stehen beispielhaft für beliebig ausgebildete Vertiefungen 35, welche in Achsrichtung beabstandet und in Umfangsrichtung geteilt im Bereich zumindest des Schaftabschnittes 32 des Verschleißstiftes in dessen Umfangsfläche 34 eingeformt sind. Durch solche Vertiefungen 35 können Formschlussverbindungen zu einem den Verschleißstift 30 umfassenden Tragteil 20 ausgebildet werden, welche eine Bewegung des Verschleißstiftes 30 gegenüber dem Tragteil 20 sowohl in Achsrichtung wie auch in Umfangsrichtung blockieren. Dabei kann die Form der Vertiefungen 35 derart gewählt sein, dass bei erwarteten Belastungen des Verschleißstiftes 30 eine Bewegung gegenüber dem Tragteil 20 sicher vermieden ist.

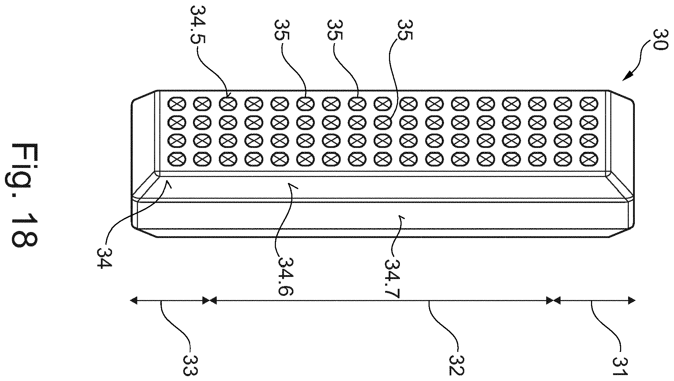

Fig. 18 zeigt in einer Seitenansicht einen Verschleißstift 30 mit polygonförmigem Querschnitt und als Rändelung ausgebildeten Vertiefungen 35. Die äußere Kontur des in Fig. 18 gezeigten Verschleißstiftes 30 entspricht, abgesehen von den Vertiefungen 35, der Kontur der in den Fig. 2a, 2b, 3a, 3b gezeigten Verschleißstifte 30, auf deren entsprechende Beschreibung hiermit verwiesen wird. In die in Umfangsrichtung gemessen langen Abschnitte (erste und fünfte Teilfläche 34.1, 34.5) der Umfangsfläche 34 sind Vertiefungen 35 in Form einer Rändelung eingeformt. Die Vertiefungen 35 sind in Achsrichtung und in Umfangsrichtung zueinander beabstandet. Sie sind entsprechend in Umfangsrichtung geteilt. Vorliegend sind die Vertiefungen 35 im Kopfabschnitt 31 im Schaftabschnitt 32 und im Fußabschnitt 33 des Verschleißstiftes 30 angeordnet.

Durch die Rändelung können sich eine Vielzahl von Formschlussverbindungen zwischen dem Verschleißstift 30 und einem den Verschleißstift 30 haltenden Tragteil 20 ausbilden. Diese wirken sowohl für eine axiale wie auch für eine in Umfangsrichtung gerichtete Bewegung des Verschleißstiftes 30 gegenüber dem Tragteil 20 blockierend.

In den Ausführungsbeispielen, wie sie in den Fig. 1 bis 18 dargestellt sind, werden Formschlussverbindungen zwischen dem Verschleißstift 30 und dem Tragteil 20 eines Gleitschutzstiftes 10 durch in Achsrichtung beabstandete und in Umfangsrichtung geteilte Vertiefungen 35 oder Erhebungen 36 in der Umfangsfläche 34 des Verschleißstiftes 30 ausgebildet. Es sei darauf hingewiesen, dass die formschlüssige Verbindung einer Vertiefung 35 jeweils auch durch eine komplementär geformte und gleich ausgerichteter Erhebung 36 und umgekehrt die formschlüssige Verbindung einer Erhebung 36 jeweils auch durch eine komplementär geformte und gleich ausgerichtete Vertiefungen 35 erreicht werden kann. Wesentliches Merkmal ist die in Umfangsrichtung vorliegende Teilung der Vertiefungen 35 bzw. Erhebungen 36, welche eine in Umfangsrichtung wirkende Formschlussverbindung zwischen dem Verschleißstift 30 und dem Tragteil 20 ermöglicht.

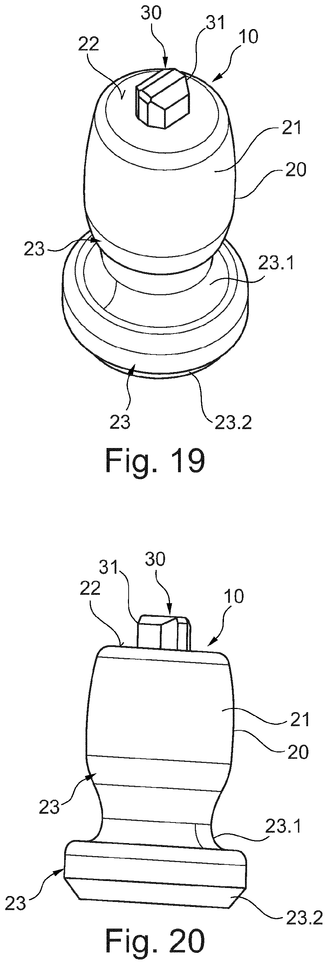

Die Figuren 19 und 20 zeigen in einer perspektivischen Darstellung und in einer Seitenansicht einen Gleitschutzstift 10 mit einem Tragteil 20 und einem darin gehaltenen Verschleißstift 30, wie er beispielhaft näher in den Figuren 2A bis 18 gezeigt ist oder eine sonstige Geometrie in Übereinstimmung mit der Erfindung aufweisen kann, insbesondere wie sie in den Ansprüchen beschrieben ist. Gegenüber dem in Figur 1 dargestellten Tragteil 20 weist das in den Figuren 19 und 20 dargestellte Tragteil 20 eine veränderte Geometrie dahingehend auf, dass kein zylindrischer Halteabschnitt 21 sondern ein balliger Halteabschnitt 21 verwendet ist. Denkbar ist auch die Verwendung eines Halteabschnitt 21, der eine beliebige andere Geometrie, beispielsweise eine konkave Geometrie oder eine kombiniert konvexkonkave Geometrie aufweisen kann. Weiterhin zeichnet sich das Tragteil 20 dadurch aus, dass zwei Flanschabschnitte 23 verwendet sind, die zueinander beabstandet angeordnet sind. Anstelle von zwei Flanschabschnitten 23 können natürlich auch drei oder mehreren Flanschabschnitte am Tragteil 20 vorgesehen sein. Während der Durchmesser des einen Flanschabschnitts kleiner ist als der maximale äußere Durchmesser des Halteabschnitts 21 weist der zweite Flanschabschnitt 23 einen größeren Außendurchmesser als der Halteabschnitt 21 auf. Die Flanschabschnitte 23 gehen über einen eingeschnürten Bereich ineinander über. Der eingeschnürte Bereich kann beispielsweise konkav von dem Übergangsabschnitt 23.1 gebildet sein. Im Übrigen kann das Tragteil 20 in Übereinstimmung mit den oben stehenden Ausführungen ausgebildet sein. Zur Vermeidung von Wiederholungen wird daher auf die obigen Ausführungen verwiesen.

## Patentansprüche

1. Gleitschutzstift (10) mit einem Verschleißstift (30) und einem Tragteil (20), wobei der Verschleißstift (30) entlang seiner Längsachse (42) zumindest einen Kopfabschnitt (31), einen Schaftabschnitt (32) und einen dem Kopfabschnitt (31) gegenüberliegenden Fußabschnitt (33) aufweist, wobei der Kopfabschnitt (31) aus dem Tragteil (20) herausragt und der Schaftabschnitt (32) und der Fußabschnitt (33) von dem Tragteil (20) aufgenommen sind, wobei der Verschleißstift (30) an dem Tragteil (20) durch zumindest eine Formschlussverbindung gehalten ist und wobei der Schaftabschnitt quer zur Längsachse (42) von einer Umfangsfläche (34) begrenzt ist,
**dadurch gekennzeichnet,**
**dass** zumindest an dem Schaftabschnitt (32) Vertiefungen (35) und/oder Erhebungen (36) angeordnet sind und dass die Vertiefungen (35) und/oder Erhebungen (36) entlang der Längsachse (42) des Verschleißstiftes (30) beabstandet zueinander angeordnet und in Umfangsrichtung zumindest abschnittsweise unterbrochen, beispielsweise geteilt sind.

2. Gleitschutzstift (10) nach Anspruch 1,
**dadurch gekennzeichnet,**
**dass** die Vertiefungen (35) und/oder die Erhebungen (36) entlang ihrer Längserstreckungen in einem Winkel (44) zu der Längsachse (42) des Verschleißstiftes (30) angeordnet sind, vorzugsweise dass die Vertiefungen (35) und/oder die Erhebungen (36) in einem Winkel (44) in einem Bereich von 0° bis 90° zu der Längsachse (42) angeordnet sind, besonders bevorzugt dass die Vertiefungen (35) und/oder die Erhebungen (36) in einem Winkel (44) in einem Bereich von 60° bis 90° zu der Längsachse (42) angeordnet sind.

3. Gleitschutzstift (10) nach Anspruch 2,
**dadurch gekennzeichnet,**
**dass** die Vertiefungen (35) und/oder die Erhebungen (36) in gleichen Winkeln (44) zu der Längsachse (42) des Verschleißstiftes (30) ausgerichtet sind oder dass die Vertiefungen (35) und/oder die Erhebungen (36) zumindest teilweise in verschiedenen Winkeln (44) zu der Längsachse (42) des Verschleißstiftes (30) ausgerichtet sind.

4. Gleitschutzstift (10) nach Anspruch 2 oder 3,
**dadurch gekennzeichnet,**
**dass** entlang der Längsachse (42) aufeinanderfolgende Vertiefungen (35) in gleichem Winkel (44) zu der Längsachse (42) des Verschleißstiftes (30) ausgerichtet sind und dass an in Umfangsrichtung benachbarten oder nicht benachbarten oder gegenüberliegenden Abschnitten der Umfangsfläche (34) angeordnete Vertiefungen (35) in unterschiedlichen Winkeln (44) zu der Längsachse (42) des Verschleißstiftes (30) ausgerichtet sind.

5. Gleitschutzstift (10) nach einem der Ansprüche 2 bis 4,
**dadurch gekennzeichnet,**
**dass** entlang der Längsachse (42) des Verschleißstiftes (30) aufeinanderfolgende Erhebungen (36) in gleichem Winkel (44) zu der Längsachse (42) des Verschleißstiftes (30) ausgerichtet sind und dass an in Umfangsrichtung benachbarten oder nicht benachbarten oder gegenüberliegenden Abschnitten der Umfangsfläche (34) angeordnete Erhebungen (36) in gleichen oder unterschiedlichen Winkeln (44) zu der Längsachse (42) des Verschleißstiftes (30) ausgerichtet sind.

6. Gleitschutzstift (10) nach einem der Ansprüche 2 bis 5,
**dadurch gekennzeichnet,**
**dass** an gegenüberliegenden Abschnitten der Umfangsfläche (34) Vertiefungen (35) angeordnet sind und dass die Vertiefungen (35) in einem Winkel (44) zu der Längsachse (42) des Verschleißstiftes (30) derart ausgerichtet sind, dass sich ihre Projektionen kreuzen und/oder dass an gegenüberliegenden Abschnitten der Umfangsfläche (34) Erhebungen (36) angeordnet sind und dass die Erhebungen (36) in einem Winkel (44) zu der Längsachse (42) des Verschleißstiftes (30) derart ausgerichtet sind, dass sich ihre Projektionen kreuzen.

7. Gleitschutzstift (10) nach einem der Ansprüche 1 bis 6,
**dadurch gekennzeichnet,**
**dass** an in Umfangsrichtung benachbarten oder nicht benachbarten oder gegenüberliegenden Abschnitten der Umfangsfläche (34) angeordnete Vertiefungen (35) in Richtung der Längsachse (42) versetzt zueinander angeordnet sind und/oder dass an in Umfangsrichtung benachbarten oder nicht benachbarten oder gegenüberliegenden Abschnitten der Umfangsfläche (34) angeordnete Erhebungen (36) in Richtung der Längsachse (42) versetzt zueinander angeordnet sind.

8. Gleitschutzstift (10) nach einem der Ansprüche 1 bis 7,
**dadurch gekennzeichnet,**
**dass** die Vertiefungen (35) entlang ihrer jeweiligen Längserstreckung gegenüber der Umfangsfläche (34) des Verschleißstiftes (30) eine gleichbleibende oder eine sich verändernde Tiefe (40) aufweisen und/oder dass die Vertiefungen (35) entlang ihrer jeweiligen Längserstreckung eine sich verändernde Kontur aufweisen und/oder dass die Erhebungen (36) entlang ihrer jeweiligen Längserstreckung gegenüber einer Umfangsfläche (34) des Verschleißstiftes (30) eine gleichbleibende oder eine sich verändernde Höhe (40) aufweisen und/oder dass die Erhebungen (36) entlang ihrer jeweiligen Längserstreckung eine sich verändernde Kontur aufweisen.

9. Gleitschutzstift (10) nach einem der Ansprüche 1 bis 8,
**dadurch gekennzeichnet,**
**dass** die Vertiefungen (35) gegenüber der Umfangsfläche (34) eine Tiefe (40) in einem Bereich von 0 bis 1mm aufweisen und/oder dass die Erhebungen (36) gegenüber der Umfangsfläche (34) eine Höhe (40) in einem Bereich von 0 bis 1mm aufweisen.

10. Gleitschutzstift (10) nach einem der Ansprüche 1 bis 9,
**dadurch gekennzeichnet,**
**dass** Übergänge von den Vertiefungen (35) und/oder den Erhebungen (36) in die Umfangsfläche (34) des Verschleißstiftes (30) abgerundet oder gefast ausgebildet sind und dass die Radien der Übergänge und/oder die Fasenbreiten der Fasen vorzugsweise zwischen 0,1mm und 0,6mm betragen.

11. Gleitschutzstift (10) nach einem der Ansprüche 1 bis 10,
**dadurch gekennzeichnet,**
**dass** die Vertiefungen (35) und/oder die Erhebungen (36) als geometrische Figuren, insbesondere als Kreise, Zylinder, Dreiecke, Pyramiden, Polygone oder Tropfen, ausgebildet sind und/oder dass die Vertiefungen (35) und/oder die Erhebungen (36) als Rändelung ausgebildet sind.

12. Gleitschutzstift (10) nach einem der Ansprüche 1 bis 11,
**dadurch gekennzeichnet,**
**dass** der Verschleißstift (30) aus einem Hartwerkstoff, insbesondere aus Hartmetall, gebildet ist.

13. Gleitschutzstift (10) nach einem der Ansprüche 1 bis 12,
**dadurch gekennzeichnet,**
**dass** das Tragteil (20) aus einem Metall oder einer Keramik oder einem Polymer, insbesondere einem verstärkten, insbesondere kugel- oder faserverstärkten Polymer, gebildet ist.

## Claims

1. Anti-skid pin (10) comprising a wear pin (30) and a support member (20), the wear pin (30) having along its longitudinal axis (42) at least a head portion (31), a shank portion (32) and a foot portion (33) opposite the head portion (31), wherein the head portion (31) projects from the support member (20) and the shank portion (32) and the foot portion (33) are received by the support member (20), wherein the wear pin (30) is held on the support member (20) by at least one positive connection and wherein the shank portion is bounded transversely to the longitudinal axis (42) by a circumferential surface (34)
**characterized**
**in that** depressions (35) and/or elevations (36) are arranged at least on the shank portion (32), and in that the depressions (35) and/or elevations (36) are arranged spaced apart from one another along the longitudinal axis (42) of the wear pin (30) and are interrupted, for example divided, at least in sections in the circumferential direction.

2. Anti-skid pin (10) according to claim 1,
**characterized**
**in that** the depressions (35) and/or the elevations (36) are arranged along their longitudinal extensions at an angle (44) to the longitudinal axis (42) of the wear pin (30), preferably in that the depressions (35) and/or the elevations (36) are arranged at an angle (44) in a range from 0° to 90° to the longitudinal axis (42), particularly preferably in that the depressions (35) and/or the elevations (36) are arranged at an angle (44) in a range from 60° to 90° to the longitudinal axis (42).

3. Anti-skid pin (10) according to claim 2,
**characterized**
**in that** the depressions (35) and/or the elevations (36) are aligned at the same angles (44) to the longitudinal axis (42) of the wear pin (30) or that the depressions (35) and/or the elevations (36) are at least partially aligned at different angles (44) to the longitudinal axis (42) of the wear pin (30).

4. Anti-skid pin (10) according to claim 2 or 3,
**characterized**
**in that** along the longitudinal axis (42) successive depressions (35) are aligned at the same angle (44) to the longitudinal axis (42) of the wear pin (30) and that depressions (35) arranged at circumferentially adjacent or non-adjacent or opposite portions of the circumferential surface (34) are aligned at different angles (44) to the longitudinal axis (42) of the wear pin (30).

5. Anti-skid pin (10) according to any one of claims 2 to 4,
**characterized**
**in that** along the longitudinal axis (42) of the wear pin (30) successive protrusions (36) are aligned at the same angle (44) to the longitudinal axis (42) of the wear pin (30), and that protrusions (36) arranged at circumferentially adjacent or non-adjacent or opposite portions of the circumferential surface (34) are aligned at the same or different angles (44) to the longitudinal axis (42) of the wear pin (30).

6. Anti-skid pin (10) according to any one of claims 2 to 5,
**characterized**
**in that** depressions (35) are arranged on opposite portions of the circumferential surface (34), and in that the depressions (35) are aligned at an angle (44) to the longitudinal axis (42) of the wear pin (30) such that their projections intersect, and/or in that elevations (36) are arranged on opposite portions of the circumferential surface (34), and in that the elevations (36) are aligned at an angle (44) to the longitudinal axis (42) of the wear pin (30) such that their projections intersect.

7. Anti-skid pin (10) according to any one of claims 1 to 6,
**characterized**
**in that** depressions (35) arranged on circumferentially adjacent or non-adjacent or opposing portions of the circumferential surface (34) are arranged offset from each other in the direction of the longitudinal axis (42) and/or that projections (36) arranged on circumferentially adjacent or non-adjacent or opposing portions of the circumferential surface (34) are arranged offset from each other in the direction of the longitudinal axis (42).

8. Anti-skid pin (10) according to any one of claims 1 to 7,
**characterized**
**in that** the depressions (35) have a constant or a changing depth (40) along their respective longitudinal extent relative to the circumferential surface (34) of the wear pin (30) and/or in that the depressions (35) have a changing contour along their respective longitudinal extent and/or in that the elevations (36) have a constant or changing height (40) along their respective longitudinal extent relative to a circumferential surface (34) of the wear pin (30) and/or in that the elevations (36) have a changing contour along their respective longitudinal extent.

9. Anti-skid pin (10) according to one of claims 1 to 8,
**characterized**
**in that** the depressions (35) have a depth (40) in a range from 0 to 1 mm relative to the circumferential surface (34) and/or in that the elevations (36) have a height (40) in a range from 0 to 1 mm relative to the circumferential surface (34).

10. Anti-skid pin (10) according to any one of claims 1 to 9,
**characterized**
**in that** transitions from the depressions (35) and/or the elevations (36) into the circumferential surface (34) of the wear pin (30) are rounded or chamfered, and in that the radii of the transitions and/or the chamfer widths of the chamfers are preferably between 0.1mm and 0.6mm.

11. Anti-skid pin (10) according to one of the claims 1 to 10,
**characterized**
**in that** the depressions (35) and/or the elevations (36) are formed as geometric figures, in particular as circles, cylinders, triangles, pyramids, polygons or drops, and/or in that the depressions (35) and/or the elevations (36) are formed as knurling.

12. Anti-skid pin (10) according to one of claims 1 to 11,
**characterized**
**in that** the wear pin (30) is formed from a hard material, in particular from hard metal.

13. Anti-skid pin (10) according to one of claims 1 to 12,
**characterized**
**in that** the support part (20) is formed from a metal or a ceramic or a polymer, in particular a reinforced, in particular spherically or fiber-reinforced polymer.

## Revendications

1. Broche antidérapante (10) comprenant une broche d'usure (30) et un élément de support (20), la broche d'usure (30) ayant le long de son axe longitudinal (42) au moins une partie de tête (31), une partie de tige (32) et une partie de pied (33) opposée à la partie de tête (31), dans lequel la partie de tête (31) fait saillie de la partie de support (20) et la partie de tige (32) et la partie de pied (33) sont reçues par la partie de support (20), dans lequel la broche d'usure (30) est maintenue sur la partie de support (20) par au moins une liaison à ajustement de forme et dans lequel la partie de tige est limitée transversalement à l'axe longitudinal (42) par une surface périphérique (34)
**caractérisé**
**en ce que** des creux (35) et/ou des surélévations (36) sont disposés au moins sur la partie de tige (32), et **en ce que** les creux (35) et/ou les surélévations (36) sont disposés à distance les uns des autres le long de l'axe longitudinal (42) de la tige d'usure (30) et sont interrompus, par exemple divisés, au moins par sections dans la direction circonférentielle.

2. Goupille antidérapante (10) selon la revendication 1,
**caractérisé**
**en ce que** les creux (35) et/ou les saillies (36) sont disposés le long de leurs extensions longitudinales sous un angle (44) par rapport à l'axe longitudinal (42) de la tige d'usure (30), de préférence **en ce que** les creux (35) et/ou les saillies (36) sont disposés sous un angle (44) dans une plage de 0° à 90° par rapport à l'axe longitudinal (42), de manière particulièrement préférée **en ce que** les creux (35) et/ou les saillies (36) sont disposés sous un angle (44) dans une plage de 60° à 90° par rapport à l'axe longitudinal (42).

3. Goupille antidérapante (10) selon la revendication 2,
caractérisé
que les dépressions (35) et/ou les surélévations (36) sont orientées selon les mêmes angles (44) par rapport à l'axe longitudinal (42) de la tige d'usure (30), ou que les dépressions (35) et/ou les surélévations (36) sont au moins partiellement orientées selon des angles différents (44) par rapport à l'axe longitudinal (42) de la tige d'usure (30).

4. Goupille antidérapante (10) selon la revendication 2 ou 3,
caractérisé
que les dépressions (35) disposées successivement le long de l'axe longitudinal (42) sont alignées selon le même angle (44) par rapport à l'axe longitudinal (42) de la broche d'usure (30), et que les dépressions (35) disposées sur des parties circonférentiellement adjacentes ou non adjacentes ou opposées de la surface circonférentielle (34) sont alignées selon des angles différents (44) par rapport à l'axe longitudinal (42) de la broche d'usure (30).

5. Goupille antidérapante (10) selon l'une quelconque des revendications 2 à 4, **caractérisé**
**en ce que** des élévations successives (36) le long de l'axe longitudinal (42) de la broche d'usure (30) sont alignées au même angle (44) par rapport à l'axe longitudinal (42) de la broche d'usure (30), et **en ce que** des élévations (36) disposées sur des parties circonférentiellement adjacentes ou non adjacentes ou opposées de la surface circonférentielle (34) sont alignées au même angle ou à des angles différents (44) par rapport à l'axe longitudinal (42) de la broche d'usure (30).

6. Goupille antidérapante (10) selon l'une quelconque des revendications 2 à 5, caractérisé
que des évidements (35) sont disposés au niveau de parties opposées de la surface circonférentielle (34), et que les évidements (35) sont alignés selon un angle (44) par rapport à l'axe longitudinal (42) de la goupille d'usure (30) de telle sorte que leurs projections se croisent et/ou que des saillies (36) sont disposées au niveau de parties opposées de la surface circonférentielle (34), et que les saillies (36) sont alignées selon un angle (44) par rapport à l'axe longitudinal (42) de la goupille d'usure (30) de telle sorte que leurs projections se croisent.

7. Goupille antidérapante (10) selon l'une quelconque des revendications 1 à 6,
caractérisé
que des dépressions (35) disposées sur des parties circonférentielles adjacentes ou non adjacentes ou opposées de la surface circonférentielle (34) sont disposées de manière décalée les unes par rapport aux autres dans la direction de l'axe longitudinal (42) et/ou que des saillies (36) disposées sur des parties circonférentielles adjacentes ou non adjacentes ou opposées de la surface circonférentielle (34) sont disposées de manière décalée les unes par rapport aux autres dans la direction de l'axe longitudinal (42).

8. Goupille antidérapante (10) selon l'une quelconque des revendications 1 à 7,
**caractérisé**
**en ce que** les creux (35) ont une profondeur (40) constante ou variable le long de leur étendue longitudinale respective par rapport à la surface circonférentielle (34) de la broche d'usure (30) et/ou **en ce que** les creux (35) ont un contour variable le long de leur étendue longitudinale respective et/ou **en ce que** les élévations (36) ont une hauteur constante ou variable (40) le long de leur étendue longitudinale respective par rapport à une surface circonférentielle (34) de la broche d'usure (30) et/ou **en ce que** les élévations (36) ont un contour variable le long de leur étendue longitudinale respective.

9. Goupille antidérapante (10) selon l'une quelconque des revendications 1 à 8,
**caractérisé**
**en ce que** les dépressions (35) ont une profondeur (40) par rapport à la surface périphérique (34) dans une plage de 0 à 1 mm et/ou que les saillies (36) ont une hauteur (40) par rapport à la surface périphérique (34) dans une plage de 0 à 1 mm.

10. Goupille antidérapante (10) selon l'une quelconque des revendications 1 à 9, **caractérisé**
**en ce que** les transitions des dépressions (35) et/ou des élévations (36) dans la surface circonférentielle (34) de la broche d'usure (30) sont arrondies ou chanfreinées, et que les rayons des transitions et/ou les largeurs des chanfreins sont de préférence compris entre 0,1 mm et 0,6 mm.

11. Goupille antidérapante (10) selon l'une quelconque des revendications 1 à 10,
**caractérisé**
**en ce que** les creux (35) et/ou les saillies (36) sont formés comme des figures géométriques, en particulier comme des cercles, des cylindres, des triangles, des pyramides, des polygones ou des gouttes, et/ou que les creux (35) et/ou les saillies (36) sont formés comme des moletages.

12. Goupille antidérapante (10) selon l'une quelconque des revendications 1 à 11,
**caractérisé**
**en ce que** la broche d'usure (30) est formée d'un matériau dur, en particulier d'un métal dur.

13. Goupille antidérapante (10) selon l'une quelconque des revendications 1 à 12,
**caractérisé**
**en ce que** la partie support (20) est formée d'un métal ou d'une céramique ou d'un polymère, en particulier d'un polymère renforcé, en particulier d'un polymère renforcé par des sphères ou des fibres.
